# EUROPÄISCHE PATENTSCHRIFT

(11) **EP 3 809 094 B1**
(45) Veröffentlichungstag und Bekanntmachung des Hinweises auf die Patenterteilung: **17.04.2024**
(21) Anmeldenummer: 19204053.3
(22) Anmeldetag: 18.10.2019
(51) Int. Cl.: G01B 11/00, B25J 9/16, G06T 7/70

(54) **VERFAHREN UND ANORDNUNG ZUM VISUALISIEREN VON SENSORSIGNALEN EINES OPTISCHEN SENSORS EINES KOORDINATENMESSGERÄTS SOWIE VERFAHREN UND ANORDNUNG ZUM VISUALISIEREN EINES SENSORS EINES KOORDINATENMESSGERÄTS**
METHOD AND ARRANGEMENT FOR VISUALISING SENSOR SIGNALS OF AN OPTICAL SENSOR OF A COORDINATE MEASURING DEVICE, AND METHOD AND ARRANGEMENT FOR VISUALISING A SENSOR OF A COORDINATE MEASURING DEVICE
PROCÉDÉ ET AGENCEMENT DE VISUALISATION DES SIGNAUX DE CAPTEUR D'UN CAPTEUR OPTIQUE D'UN APPAREIL DE MESURE DE COORDONNÉES AINSI QUE PROCÉDÉ ET AGENCEMENT DE VISUALISATION D'UN CAPTEUR D'UN APPAREIL DE MESURE DE COORDONNÉES

(43) Veröffentlichungstag der Anmeldung: 21.04.2021
(73) Patentinhaber: Carl Zeiss Industrielle Messtechnik GmbH, 73447 Oberkochen (DE)
(72) Erfinder: Ritter, Markus, 89520 Heidenheim (DE); Hersacher, Steffen, 73463 Westhausen (DE); Neumaier, Kilian, 89520 Heidenheim (DE)
(74) Vertreter: Patentanwälte Bressel und Partner mbB

(56) Entgegenhaltungen:
- EP-A2- 0 916 923
- US-A1- 2005 203 367
- US-A1- 2015 253 125
- US-A1- 2018 228 554

## Beschreibung

Verfahren und Anordnung zum Visualisieren von Sensorsignalen eines optischen Sensors eines Koordinatenmessgeräts sowie Verfahren und Anordnung zum Visualisieren eines Sensors eines Koordinatenmessgeräts

Die Erfindung betrifft ein Verfahren und eine Anordnung zum Visualisieren von Sensorsignalen eines optischen Sensors eines Koordinatenmessgeräts. Ferner betrifft die Erfindung ein Verfahren und eine Anordnung zum Visualisieren eines Sensors eines Koordinatenmessgeräts. Bei der Anordnung kann es sich jeweils um ein Koordinatenmessgerät handeln. Es ist jedoch auch möglich, dass zumindest Teile der Anordnung separat von einem Koordinatenmessgerät realisiert sind und die Anordnung ausgestaltet ist, Sensorsignale und/oder Information über die Position des Sensors von dem Koordinatenmessgerät zu empfangen.

Häufig werden an Koordinatenmessgeräten optische Sensoren zur Vermessung eines Messobjekts eingesetzt. Auch als Bestandteile von Mikroskopen werden optische Sensoren eingesetzt. In beiden Fällen ist ein Raum zur Anordnung eines Werkstücks vorhanden, das von dem optischen Sensor erfasst wird. Wenn in dieser Beschreibung von einem Werkstück die Rede ist, dann schließt dies den Fall mit ein, dass sich mehr als ein Werkstück in dem Raum befindet und auch mehr als ein Werkstück von dem optischen Sensor und/oder von einem anderen Sensor des Koordinatenmessgeräts oder des Mikroskops erfasst wird. Unter optischen Sensoren werden Sensoren verstanden, die elektromagnetische Strahlung von dem Messobjekt empfangen. In Bezug auf die vorliegende Erfindung werden insbesondere bildgebende optische Sensoren betrachtet, wobei es sich bei dem Bild um ein eindimensionales, zweidimensionales oder dreidimensionales Bild handeln kann. Eindimensionale Bilder werden z. B. von Sensoren mit einer Zeilenmatrix aus Sensorelementen erzeugt. Z.B. handelsübliche Digitalkameras erzeugen zweidimensionale Bilder. Es ist beispielsweise aber auch möglich, dass zweidimensionale Bereiche des Messobjekts unter Verwendung von Punktsensoren oder eindimensionalen Sensoren gescannt werden und auf diese Weise zweidimensionale Bilder erzeugt werden. Dreidimensionale Bilder können z.B. von TOF (Time Of Flight) Kameras erzeugt werden. Eine andere Möglichkeit hierzu bieten Stereo-Kamerasysteme oder Muster-Projektionssysteme. Die Erfindung ist jedoch nicht auf die genannten Beispiele optischer Sensoren beschränkt.

Ferner betrifft die Erfindung das Gebiet der Koordinatenmessgeräte, bei denen am Koordinatenmessgerät zumindest ein beliebiger Sensor zur Vermessung eines Messobjekts angeordnet ist, welcher relativ zu einem Raum beweglich ist, in dem ein Werkstück als Messobjekt angeordnet werden kann. Bezogen auf die Umgebung des Koordinatenmessgeräts bedeutet dies, dass entweder das Messobjekt oder der Sensor oder beide bewegt werden können.

Für die Planung und Überwachung des Messbetriebes eines Koordinatenmessgeräts, des Betriebes von Mikroskopen sowie für die Auswertung und Beurteilung von Ergebnissen der Erfassung von vermessenden bzw. erfassten Objekten ist es von Vorteil, wenn entweder die Position des Sensors oder ein aus den Sensorsignalen des Sensors erzeugtes Sensorbild in Bezug auf eine Szene visualisiert wird, wobei die Szene relativ zu dem Raum, in dem sich das zu erfassende Werkstück befindet oder angeordnet werden kann, ortsfest ist. Bei der Szene kann es sich um eine reale, z. B. mit einer Kamera aufgenommene Szene handeln, die z.B. Teile und/oder Zubehör des Koordinatenmessgeräts oder Mikroskops und/oder das Werkstück enthalten kann, und/oder es kann sich um eine simulierte und/oder animierte Szene handeln, die z.B. unter Nutzung von CAD-Daten des Werkstücks, des Koordinatenmessgeräts oder Mikroskops und/oder von Messergebnissen aus der Vermessung des Werkstücks gebildet ist. Z.B. können als Messergebnisse festgestellte Prüfmerkmale an einem Ort in einem visualisierten Bild dargestellt werden, wobei der Ort einem entsprechenden realen Ort des beobachteten Objekts (zum Beispiel Messobjekts) entspricht.

Von besonderem Vorteil ist es, wenn ein aus den Sensorsignalen erzeugtes Sensorbild insbesondere wiederholt und aktualisiert aus den aktuellen Sensorsignalen lagerichtig gemeinsam mit einem Bild der Szene visualisiert wird. Insbesondere kann ein Nutzer dann aus der Darstellung erkennen, wo sich der von dem Sensor erfasste Bereich in der Szene befindet. Diese Information kann der Nutzer z.B. für die Programmierung eines Messablaufs verwenden oder zur Überprüfung der Ausführung eines Messablaufs. Während des Messablaufs oder der Programmierung kann der Sensor sich relativ zu dem Raum für das zu erfassende Werkstück bewegen und bei wiederholter, jeweils aktualisierter Visualisierung ist der Ablauf erkennbar. Das Sensorbild kann daher einen beliebigen Bereich des Raumes abbilden. Während eines Messbetriebes des Koordinatenmessgeräts kann das Sensorbild das zu vermessende Werkstück oder einen Teil davon abbilden.

Wie oben bereits beschrieben wurde, kann die von dem Sensor zu einem bestimmten Zeitpunkt erzeugte Bildinformation je nach Art des Sensors ein-, zwei- oder dreidimensional sein. Z. B. durch Zusammensetzen der Bildinformation mehrerer Zeilenkameras, durch Scannen des Raumes mit mindestens einer Zeilenkamera, durch Übernahme oder Bearbeitung eines Bildes einer zweidimensionalen Kamera oder durch Erzeugung eines Projektions- oder Schnittbildes aus dreidimensionaler Bildinformation kann das zweidimensionale Sensorbild erzeugt werden, das von Ausführungsformen der Erfindung bei der Visualisierung verwendet wird.

Bei einer Variante der Erfindung wird anstelle des aus den Sensorsignalen erzeugten Sensorbildes eine Darstellung des Sensors lagerichtig mit einem Bild der Szene dargestellt. Z.B. bei taktilen Sensoren, aber auch bei berührungslos messenden Sensoren kann durch die Visualisierung ebenfalls erkannt werden, wie der Messablauf gestaltet werden soll oder ausgeführt wird. Insbesondere bei Koordinatenmessgeräten mit derartigen Sensoren können auch zusätzliche Kameras vorgesehen sein, wie zum Beispiel aus DE 10 2010 014 423 A1 bekannt.

Bei der zuvor beschriebenen Visualisierung in Bezug auf eine Szene des Koordinatenmessgeräts oder Mikroskops wird in den meisten Situationen zweckmäßigerweise nicht die gesamte Szene dargestellt, sondern lediglich ein Ausschnitt davon. Andernfalls sind wichtige Details aus der Darstellung nicht erkennbar. Je nachdem, wo sich der Sensor momentan befindet bzw. welchen Teil des Raumes der optische Sensor erfasst, ist daher jeweils ein daran angepasster Ausschnitt der Szene für die Visualisierung zu verwenden.

US 2015/0253125 offenbart ein Koordinatenmessgerät mit einem Gelenkarm, an dem eine Kamera und ein Display angeordnet sind. Auf einem Bildschirm des Display wird eine künstliche Ansicht dargestellt, die eine Kombination eines Bildes der Kamera und eines zweidimensionalen Bildes sein kann, welches aus CAD Daten oder dreidimensionalen Modelldaten erzeugt worden ist, wobei deren Ansichten übereinstimmen. Die Übereinstimmung kann durch digitale Techniken der Bildverarbeitung (zum Beispiel durch Kanten-Extraktion) ermittelt werden und/oder entsprechend der Tatsache, dass der Blickpunkt der Kamera entsprechend der Pose des Arms ermittelbar ist. Zum Beispiel kann die Displayeinheit einen Teil des Kamerabildes darstellen, das durch die Überlagerung der Außenumrisse des aus CAD Daten gerenderten Objekts verbessert ist.

US 2018/228554 A1 zum Einbringen eines Stents in ein Lumen eines Patientenkörpers. Ein Bild des Lumens wird mit einer Darstellung des Stents überlagert.

Es ist eine Aufgabe der vorliegenden Erfindung, ein Verfahren zum Visualisieren von Sensorsignalen eines optischen Sensors eines Koordinatenmessgeräts, ein Verfahren zum Visualisieren eines Sensors eines Koordinatenmessgeräts, eine Anordnung zum Visualisieren von Sensorsignalen eines optischen Sensors eines Koordinatenmessgeräts und/oder eine Anordnung zum Visualisieren eines

Sensors eines Koordinatenmessgeräts anzugeben, die bei wiederholter Visualisierung und bei Bewegung des Sensors relativ zu dem Raum zur Anordnung eines Werkstücks eine übersichtliche und detaillierte Darstellung ermöglichen, wobei der Aufwand für eine Anpassung des dargestellten Ausschnitts der visualisierten Szene gering sein soll.

Es wird vorgeschlagen, das aus den Sensorsignalen des optischen Sensors erzeugte Sensorbild oder - in einem anderen Fall - eine Darstellung des an dem Koordinatenmessgerät angeordneten Sensors mit einem aus Daten der dreidimensionalen Szene erzeugten zweidimensionalen Ansichtsbild eines Teilbereichs der dreidimensionalen Szene lagerichtig zu einem zweidimensionalen Ausgabebild zu kombinieren. Wenn bei einer wiederholten Erzeugung des Ausgabebildes das Sensorbild oder in dem anderen Fall die Darstellung des Sensors sich von einem zentralen Bereich des Ansichtsbildes über einen vordefinierten Rand des Ansichtsbildes hinauserstrecken würde, dann wird ein anderes Ansichtsbild aus den Daten der dreidimensionalen Szene erzeugt, wobei das andere zweidimensionale Ansichtsbild einen entsprechend der Relativbewegung des Sensors und des Raumes verschobenen Teilbereich der Szene erfasst. Anders ausgedrückt bewegt sich der darzustellende Teilbereich der Szene mit, wenn das Sensorbild oder in dem anderen Fall die Darstellung des Sensors den Rand überschreitet. Der Rand ist jeweils in Bezug auf ein Koordinatensystem der Bildebene des Ansichtsbildes vorgegeben.

Wenn das Ansichtsbild durch Veränderung des dargestellten Teilbereichs der Szene verändert und dadurch angepasst wird, verändert sich auch die Lage des Randes in Bezug auf die Szene. Dabei ist zu berücksichtigen, dass der Prüfung, ob sich das Sensorbild oder in dem anderen Fall die Darstellung des Sensors über den Rand hinauserstreckt, immer ein vorhandenes Ansichtsbild zugrunde liegt, auf das bezogen der Rand positioniert ist. Wenn das Ansichtsbild verändert wird, kann das veränderte Ansichtsbild mit dem in Bezug auf die Szene verändert positionierten Rand für die nächstfolgende oder eine andere spätere Prüfung verwendet werden. Zu beachten ist ferner, dass der Rand, der bei der Prüfung berücksichtigt wird, mit dem Außenrand des jeweils vorhandenen Ansichtsbildes übereinstimmen kann, aber nicht übereinstimmen muss. Vielmehr wird bevorzugt, dass ein Abstand zwischen dem Außenrand des Ansichtsbildes und dem für die Prüfung verwendeten Rand besteht, sodass eine dazwischen liegende Zone definiert ist, welche als Puffer-Zone bezeichnet werden kann. Eine Veränderung des Ansichtsbildes kann daher bei vorhandener Puffer-Zone erst dann erfolgen, wenn der Außenrand des Ansichtsbildes überschritten ist (in diesem Fall liegt der Rand außerhalb des Außenrandes), oder bereits dann erfolgen, wenn der Außenrand des Ansichtsbildes noch nicht erreicht ist (in diesem Fall liegt der Rand innerhalb des Außenrandes). Wenn der Rand innerhalb des Außenrandes liegt, kann der Bereich des Ausgabebildes zwischen dem Außenrand des Ansichtsbildes und dem Rand für die Prüfung insbesondere zur Darstellung weiterer Inhalte genutzt werden, wie zum Beispiel für Elemente einer interaktiven grafischen Benutzeroberfläche. Allgemein wird bevorzugt, dass das Ansichtsbild der Szene bei der wiederholten Visualisierung immer dieselbe Größe hat und der Rand immer dieselbe Lage hat in Bezug auf den Bildbereich, der für das Ansichtsbild zur Verfügung steht.

Insbesondere wird vorgeschlagen: Ein Verfahren zum Visualisieren von Sensorsignalen eines optischen Sensors eines Koordinatenmessgeräts, wobei
- der optische Sensor und ein Raum zum Anordnen eines zu erfassenden Werkstücks relativ zu einander beweglich sind,
- Daten einer dreidimensionalen Szene, die relativ zu dem Raum unbeweglich ist, empfangen werden und/oder vorliegen,
- wiederholt ein aus Bildsignalen des optischen Sensors erzeugtes zweidimensionales Sensorbild, das in einer gegebenen Relativposition des optischen Sensors und des Raumes einen Raumbereich des Raumes abbildet, mit einem aus den Daten der dreidimensionalen Szene erzeugten zweidimensionalen Ansichtsbild eines Teilbereichs der dreidimensionalen Szene lagerichtig zu einem zweidimensionalen Ausgabebild kombiniert wird und das Ausgabebild zur Darstellung durch eine Bilddarstellungseinrichtung ausgegeben wird,
- das zweidimensionale Ansichtsbild entsprechend seiner zwei Dimensionen zwei Richtungen aufweist, entlang denen Bildelemente des Ansichtsbildes darstellbar sind und bei Darstellung durch die Bilddarstellungseinrichtung auch dargestellt werden, wobei für das Ansichtsbild bezüglich zumindest einer der zwei Richtungen einander gegenüberliegende Ränder vordefiniert sind, zwischen denen sich ein zentraler Bereich des Ansichtsbildes befindet,
- wenn das Sensorbild im Vergleich zu einer vorhergehenden Erzeugung des Ausgabebildes nicht mehr denselben Raumbereich abbildet, weil der optische Sensor und der Raum zum Anordnen des zu erfassenden Werkstücks relativ zu einander eine Relativbewegung ausgeführt haben, bei einer wiederholten Erzeugung des Ausgabebildes geprüft wird, ob - bezogen auf ein vorhergehend erzeugtes Ausgabebild bei Verwendung desselben Ansichtsbildes wie in dem vorhergehend erzeugten Ausgabebild - sich das Sensorbild von dem zentralen Bereich über zumindest einen der beiden einander gegenüberliegenden Ränder hinweg erstrecken würde, und, wenn dies der Fall ist, ein anderes zweidimensionales Ansichtsbild aus den Daten der dreidimensionalen Szene erzeugt wird, wobei das andere zweidimensionale Ansichtsbild einen entsprechend der Relativbewegung verschobenen Teilbereich der dreidimensionalen Szene erfasst.

Ferner wird vorgeschlagen: Ein Verfahren zum Visualisieren eines Sensors eines Koordinatenmessgeräts, wobei
- der Sensor und ein Raum zum Anordnen eines zu erfassenden Werkstücks relativ zu einander beweglich sind,
- Daten einer dreidimensionalen Szene, die relativ zu dem Raum unbeweglich ist, empfangen werden und/oder vorliegen,
- wiederholt eine zweidimensionale Darstellung des Sensors mit einem aus den Daten der dreidimensionalen Szene erzeugten zweidimensionalen Ansichtsbild eines Teilbereichs der dreidimensionalen Szene lagerichtig zu einem zweidimensionalen Ausgabebild kombiniert wird und das Ausgabebild zur Darstellung durch eine Bilddarstellungseinrichtung ausgegeben wird,
- das zweidimensionale Ansichtsbild entsprechend seiner zwei Dimensionen zwei Richtungen aufweist, entlang denen Bildelemente des Ansichtsbildes darstellbar sind und bei Darstellung durch die Bilddarstellungseinrichtung auch dargestellt werden, wobei für das Ansichtsbild bezüglich zumindest einer der zwei Richtungen einander gegenüberliegende Ränder vordefiniert sind, zwischen denen sich ein zentraler Bereich des Ansichtsbildes befindet,
- wenn der Sensor im Vergleich zu einer vorhergehenden Erzeugung des Ausgabebildes nicht mehr an derselben Position relativ zu dem Raum angeordnet ist, weil der Sensor und der Raum relativ zu einander eine Relativbewegung ausgeführt haben, bei einer wiederholten Erzeugung des Ausgabebildes geprüft wird, ob - bezogen auf ein vorhergehend erzeugtes Ausgabebild bei Verwendung desselben Ansichtsbildes wie in dem vorhergehend erzeugten Ausgabebild - sich die Darstellung des Sensors von dem zentralen Bereich über zumindest einen der beiden einander gegenüberliegenden Ränder hinweg erstrecken würde, und, wenn dies der Fall ist, ein anderes zweidimensionales Ansichtsbild aus den Daten der dreidimensionalen Szene erzeugt wird, wobei das andere zweidimensionale Ansichtsbild einen entsprechend der Relativbewegung verschobenen Teilbereich der dreidimensionalen Szene erfasst.

Die Darstellung des Ausgabebildes und damit zumindest eines Teils des Ansichtsbildes durch die Bilddarstellungseinrichtung ist ein optionaler Teil der Verfahren.

Ferner gehört zum Umfang der Erfindung eine Anordnung zum Visualisieren von Sensorsignalen eines optischen Sensors eines Koordinatenmessgeräts, wobei der optische Sensor und ein Raum zum Anordnen eines zu erfassenden Werkstücks relativ zu einander beweglich sind, wobei die Anordnung eine Schnittstelle aufweist zum Empfang von Daten einer dreidimensionalen Szene, die relativ zu dem Raum unbeweglich ist, und wobei die Anordnung aufweist:
- eine Kombinationseinrichtung, die ausgestaltet ist, wiederholt ein aus Bildsignalen des optischen Sensors erzeugtes zweidimensionales Sensorbild, das in einer gegebenen Relativposition des optischen Sensors und des Raumes einen Raumbereich des Raumes abbildet, mit einem aus den Daten der dreidimensionalen Szene erzeugten zweidimensionalen Ansichtsbild eines Teilbereichs der dreidimensionalen Szene lagerichtig zu einem zweidimensionalen Ausgabebild zu kombinieren und das Ausgabebild zur Darstellung durch eine Bilddarstellungseinrichtung auszugeben, wobei das zweidimensionale Ansichtsbild entsprechend seiner zwei Dimensionen zwei Richtungen aufweist, entlang denen Bildelemente des Ansichtsbildes darstellbar sind und bei Darstellung durch die Bilddarstellungseinrichtung auch dargestellt werden, wobei für das Ansichtsbild bezüglich zumindest einer der zwei Richtungen einander gegenüberliegende Ränder vordefiniert sind, zwischen denen sich ein zentraler Bereich des Ansichtsbildes befindet,
- eine Bestimmungseinrichtung, die ausgestaltet ist, wenn das Sensorbild im Vergleich zu einer vorhergehenden Erzeugung des Ausgabebildes nicht mehr denselben Raumbereich abbildet, weil der optische Sensor und der Raum zum Anordnen des zu erfassenden Werkstücks relativ zu einander eine Relativbewegung ausgeführt haben, bei einer wiederholten Erzeugung des Ausgabebildes zu prüfen, ob - bezogen auf ein vorhergehend erzeugtes Ausgabebild bei Verwendung desselben Ansichtsbildes wie in dem vorhergehend erzeugten Ausgabebild - sich das Sensorbild von dem zentralen Bereich über zumindest einen der beiden einander gegenüberliegenden Ränder hinweg erstrecken würde, und, wenn dies der Fall ist, ein anderes zweidimensionales Ansichtsbild aus den Daten der dreidimensionalen Szene zu erzeugen und an die Kombinationseinrichtung auszugeben, wobei das andere zweidimensionale Ansichtsbild einen entsprechend der Relativbewegung verschobenen Teilbereich der dreidimensionalen Szene erfasst.

Auch gehört zum Umfang der Erfindung eine Anordnung zum Visualisieren eines Sensors eines Koordinatenmessgeräts, wobei der Sensor und ein Raum zum Anordnen eines zu erfassenden Werkstücks relativ zu einander beweglich sind, wobei die Anordnung eine Schnittstelle aufweist zum Empfang von Daten einer dreidimensionalen Szene, die relativ zu dem Raum unbeweglich ist, und wobei die Anordnung aufweist:
- eine Kombinationseinrichtung, die ausgestaltet ist, wiederholt eine zweidimensionale Darstellung des Sensors mit einem aus den Daten der dreidimensionalen Szene erzeugten zweidimensionalen Ansichtsbild eines Teilbereichs der dreidimensionalen Szene lagerichtig zu einem zweidimensionalen Ausgabebild zu kombinieren und das Ausgabebild zur Darstellung durch eine Bilddarstellungseinrichtung auszugeben, wobei das zweidimensionale Ansichtsbild entsprechend seiner zwei Dimensionen zwei Richtungen aufweist, entlang denen Bildelemente des Ansichtsbildes darstellbar sind und bei Darstellung durch die Bilddarstellungseinrichtung auch dargestellt werden, wobei für das Ansichtsbild bezüglich zumindest einer der zwei Richtungen einander gegenüberliegende Ränder vordefiniert sind, zwischen denen sich ein zentraler Bereich des Ansichtsbildes befindet,
- eine Bestimmungseinrichtung, die ausgestaltet ist, wenn der Sensor im Vergleich zu einer vorhergehenden Erzeugung des Ausgabebildes nicht mehr an derselben Position relativ zu dem Raum angeordnet ist, weil der Sensor und der Raum relativ zu einander eine Relativbewegung ausgeführt haben, bei einer wiederholten Erzeugung des Ausgabebildes zu prüfen, ob - bezogen auf ein vorhergehend erzeugtes Ausgabebild bei Verwendung desselben Ansichtsbildes wie in dem vorhergehend erzeugten Ausgabebild - sich die Darstellung des Sensors von dem zentralen Bereich über zumindest einen der beiden einander gegenüberliegenden Ränder hinweg erstrecken würde, und, wenn dies der Fall ist, ein anderes zweidimensionales Ansichtsbild aus den Daten der dreidimensionalen Szene zu erzeugen und an die Kombinationseinrichtung auszugeben, wobei das andere zweidimensionale Ansichtsbild einen entsprechend der Relativbewegung verschobenen Teilbereich der dreidimensionalen Szene erfasst.

Insbesondere kann daher ein erstes aus Bildsignalen des optischen Sensors erzeugtes zweidimensionales Sensorbild, das in einer ersten Relativposition des optischen Sensors und des Raumes einen ersten Raumbereich des Raumes abbildet, mit einem ersten aus den Daten der dreidimensionalen Szene erzeugten zweidimensionalen Ansichtsbild eines ersten Teilbereichs der dreidimensionalen Szene zu einem ersten zweidimensionalen Ausgabebild kombiniert werden und das erste Ausgabebild zur Darstellung durch eine Bilddarstellungseinrichtung ausgegeben werden. Zu einem späteren Zeitpunkt, und insbesondere unmittelbar auf die Erzeugung des ersten Ausgabebildes folgend, kann ein zweites aus Bildsignalen des optischen Sensors erzeugtes zweidimensionales Sensorbild, das in einer zweiten Relativposition des optischen Sensors und des Raumes einen zweiten Raumbereich des Raumes abbildet, mit einem zweiten aus den Daten der dreidimensionalen Szene erzeugten zweidimensionalen Ansichtsbild eines zweiten Teilbereichs der dreidimensionalen Szene zu einem zweiten zweidimensionalen Ausgabebild kombiniert werden und das zweite Ausgabebild zur Darstellung durch die Bilddarstellungseinrichtung ausgegeben werden. Dabei hat eine Relativbewegung von der ersten Relativposition zu der zweiten Relativposition stattgefunden. Wenn sich das zweite Sensorbild von dem zentralen Bereich über zumindest einen der beiden einander gegenüberliegenden Ränder des ersten Ansichtsbildes hinaus erstrecken würde, ist der zweite Teilbereich der dreidimensionalen entsprechend der Relativbewegung gegenüber dem ersten Teilbereich der dreidimensionalen Szene verschoben. Entsprechendes gilt für den Fall, dass jeweils statt des zweidimensionalen Sensorbildes eine zweidimensionale Darstellung des Sensors mit dem Ansichtsbild lagerichtig zu einem Ausgabebild kombiniert wird.

Da das andere (zum Beispiel das zweite) Ansichtsbild einen entsprechend der Relativbewegung des Sensors und des Raumes verschobenen Teilbereich der dreidimensionalen Szene erfasst, kann ein geeigneter Ausschnitt der Szene dargestellt werden, wobei die Darstellung einerseits übersichtlich ist und andererseits keinen zu großen Ausschnitt der Szene darstellen muss und daher Details in ausreichender Größe darstellen kann. Ferner ist der Aufwand für den Benutzer, der die Darstellung betrachtet, bezüglich der sich anpassenden Visualisierung gering. Insbesondere kann bei Ausführung des Verfahrens das andere Ansichtsbild automatisch erzeugt werden. Daher kann der Benutzer zum Beispiel lediglich die Relativbewegung durchführen oder steuern oder die Relativbewegung kann automatisch gesteuert werden. In beiden Fällen muss der Benutzer nicht selbst für eine aktualisierte Visualisierung sorgen.

Die dreidimensionale Szene kann durch einen dreidimensionalen Datensatz repräsentiert werden, d.h. die Daten der Szene sind auf ein dreidimensionales Koordinatensystem, wie z.B. ein kartesisches Koordinatensystem, bezogen. Aus dem dreidimensionalen Datensatz kann dann in einer Ausgestaltung jeweils das für das Ausgabebild zu verwendende Ansichtsbild des Teilbereichs der dreidimensionalen Szene erzeugt werden, z.B. durch Projektion des Teilbereichs auf die Bildebene des zweidimensionalen Ansichtsbildes. Alternativ kann eine Mehrzahl von Ansichtsbildern der dreidimensionalen Szene vorab erzeugt worden sein und wird bei einer Veränderung des für das Ausgabebild zu verwendenden Teilbereichs der dreidimensionalen Szene ein dem jeweiligen Teilbereich entsprechendes vorhandenes Ansichtsbild ausgewählt. Insbesondere kann daher für eine Mehrzahl von Teilbereichen der dreidimensionalen Szene vorab jeweils ein Ansichtsbild erzeugt werden, sodass jedoch nicht für jeden möglichen Teilbereich der Szene ein Ansichtsbild vorhanden ist. Ferner ist die Blickrichtung auf die Szene vorzugsweise immer die gleiche. Z.B. kann die Blickrichtung immer mit der z-Richtung eines dreidimensionalen kartesischen Koordinatensystems x-y-z des Koordinatenmessgeräts oder (nicht gemäß den Ansprüchen) Mikroskops zusammenfallen oder mit der Richtung einer anderen Koordinatenachse des Koordinatensystems. Dadurch ist die Anzahl der möglichen Ansichtsbilder erheblich reduziert. Aber auch bei gleichbleibender Blickrichtung muss nicht für jeden möglichen Teilbereich der Szene ein Ansichtsbild vorab erzeugt worden sein. Z.B. können die Außengrenzen der Ansichtsbilder und somit der dargestellten Teilbereiche einem regulären Raster in der Ansichtsebene der Szene entsprechen, wobei der Rasterabstand größer ist als die Größe eines Bildelements des Ansichtsbildes. In diesem Fall kann nicht jede Relativbewegung des Sensors und des Raumes durch eine gleichgroße Versetzung des dargestellten Teilbereichs der Szene visualisiert werden. Z.B. kann es daher vorkommen, dass sich die Position des Sensorbildes oder der Darstellung des Sensors in dem Ausgabebild sprungartig verändert.

Bevorzugt wird aber jeweils bei Verwendung eines veränderten Ansichtsbildes, das den entsprechend versetzten Teilbereich der Szene darstellt, das Ansichtsbild aus einem dreidimensionalen Datensatz der Szene zu erzeugen, und zwar vorzugsweise derart, dass die Position des Sensorbildes oder der Darstellung des Sensors in dem Ausgabebild nicht sprungartig um mehr als ein Pixel verändert wird.

Insbesondere kann der dreidimensionale Datensatz nicht nur die dreidimensionalen Daten der Szene aufweisen, sondern auch aus den Sensorsignalen erzeugte Sensordaten oder in dem anderen Fall Daten zur Darstellung des Sensors. Dabei wird es bevorzugt, dass der dreidimensionale Datensatz entsprechend der aktuellen Relativposition von Sensor und Raum verändert wird und die aktuellen erzeugten Sensordaten bzw. in dem anderen Fall die Daten zur Darstellung des Sensors gemäß der aktuellen Position des Sensors enthält. Auch im ersten Fall der aus den Sensorsignalen erzeugten Sensordaten sind diese an derjenigen Position in dem dreidimensionalen Datensatz zu speichern, die bei der aktuellen Position des Sensors relativ zu dem Raum dem von dem Sensor erfassten Teil des Raumes entspricht. Die Position kann zum Beispiel die Position des Sensors sein oder es kann sich zum Beispiel um eine zentrale Position der Darstellung des Sensors in der Fokusebene oder in einer Ebene mit einem vorgegebenen Abstand zum Sensor bzw. um eine zentrale Position des von dem Sensor erfassten Teils des Raumes handeln. Bevorzugt wird es daher, dass bei der Erzeugung des Ausgabebildes ein auf ein dreidimensionales Koordinatensystem des Raumes bezogener dreidimensionaler Datensatz verwendet wird, der die dreidimensionalen Daten der Szene und
- im ersten Fall aus den Sensorsignalen erzeugte Sensordaten oder
- im anderen Fall Daten zur Darstellung des Sensors
gemäß der aktuellen Position des Sensors aufweist.

Das Ansichtsbild kann daher unmittelbar aus dem dreidimensionalen Datensatz erzeugt werden. Dabei ist zu betonen, dass in konkreten Ausgestaltungen zweidimensionale Daten, nämlich z.B. das aktuelle Sensorbild oder die Darstellung des Sensors an der der aktuellen Position des Sensors entsprechenden Position, an einer Position in der Fokusebene oder an einer Position in einer Ebene mit vorgegebenen Abstand zum Sensor als Teile des dreidimensionalen Datensatzes abgespeichert werden können. Z.B. kann das Sensorbild oder die Darstellung des Sensors bezogen auf die Blickrichtung des zu erstellenden Ansichtsbildes immer im Vordergrund liegen, d.h. kein Teil der Szene verdeckt das Sensorbild. Im Fall der Darstellung des Sensors kann diese ebenfalls im Vordergrund liegen, wobei es jedoch auch möglich ist, dass durch die Darstellung des Sensors hindurch Teile der Szene erkennbar sind, d.h. dieselben Pixel des Ausgabebildes können sowohl Teile des Sensorbildes als auch der Szene darstellen. Das Sensorbild bzw. die Darstellung des Sensors liegt z. B. immer im Vordergrund, wenn in Blickrichtung des Ansichtsbildes ausschließlich Bereiche der Szene hinter der Bildebene des Sensorbildes bzw. hinter der Darstellung des Sensors für das Ausgabebild verwendet werden.

Unabhängig davon, ob ein gemeinsamer dreidimensionaler Datensatz für Daten der Szene und für das Sensorbild oder die Darstellung des Sensors verwendet wird, kann auf dem Ausgabebild das Sensorbild vor dem Hintergrund des Ansichtsbildes der Szene erkennbar sein. Dies kann zum Beispiel dadurch erreicht werden, dass das Sensorbild bei Darstellung des Ausgabebildes vollständig erkennbar ist und Pixel des Sensorbildes Pixel des Ansichtsbildes an der jeweiligen Position des Ausgabebildes ersetzen. Es ist jedoch auch möglich, dass Elemente der Szene auch an Positionen des Sensorbildes im Ausgabebild erkennbar sind. Zum Beispiel können Konturen der Szene durchscheinen. Dies kann z. B. dadurch erreicht werden, dass Pixel an Positionen des Sensorbildes im Ausgabebild, die den Konturen entsprechen, dunkler sind oder eine vorgegebene Farbe haben.

Die Kombination des zweidimensionalen Sensorbildes mit dem zweidimensionalen Ansichtsbild kann wie erwähnt auf unterschiedliche Weise erreicht werden, nämlich z.B. durch Einfügen der Sensordaten oder des entsprechenden Sensorbildes in den dreidimensionalen Datensatz und anschließendes Erzeugen des Ausgabebildes aus dem Datensatz. Alternativ kann z.B. aus dem dreidimensionalen Datensatz ohne die Informationen von dem Sensor oder ohne die Informationen über die Darstellung des Sensors das Ansichtsbild erzeugt werden und dieses Ansichtsbild kann mit dem zweidimensionalen Sensorbild bzw. der zweidimensionalen Darstellung des Sensors lagerichtig kombiniert werden. In jedem Fall erfordert es eine lagerichtige Kombination zu berücksichtigen, dass die dreidimensionale Szene und der Raum zum Anordnen des zu erfassenden Werkstücks relativ zueinander unbeweglich sind, jedenfalls während einer gegebenen Betriebsphase. Selbstverständlich kann in einer anderen Betriebsphase eines Koordinatenmessgeräts oder (nicht gemäß den Ansprüchen) Mikroskops die Szene verändert oder verschoben werden, z.B. wenn ein Sensormagazin an einer anderen Stelle des Koordinatenmessgeräts oder Mikroskops platziert wird.

Die Kombination des zweidimensionalen Sensorbildes mit dem zweidimensionalen Ansichtsbild der Szene erfordert es, dass die Kombination in der Bildebene des zweidimensionalen Ausgabebildes entsprechend der Relativposition von Sensor und Raum in Bezug auf die Bildebene lagerichtig ist. Allgemein kann daher das Sensorbild oder die Darstellung des Sensors in verschiedenen Bildgrößen jeweils lagerichtig zu dem zweidimensionalen Ansichtsbild sein. Bevorzugt ist die Kombination aber auch bezüglich des Verhältnisses der Bildgrößen des Sensorbildes und des Ansichtsbildes lagerichtig, d.h. entsprechend der Relativposition von Sensor und Raum in der Richtung senkrecht zur Bildebene.

Insbesondere kann das Ausgabebild eine konstante Größe haben, d. h. bei wiederholter Erzeugung und Ausgabe des Ausgabebildes ändert sich die Größe nicht. Auch das Ansichtsbild kann eine konstante Größe haben. Andererseits bedeutet eine konstante Größe nicht zwingend, dass durch das Bild gleichgroße räumliche Bereiche dargestellt werden. Auch wenn dies in vielen Betriebsphasen der Fall ist, kann zum Beispiel wie unten noch beschrieben wird die dreidimensionale Szene im Vergleich zu einer vorhergehenden Erzeugung des Ausgabebildes verkleinert oder vergrößert dargestellt werden. Eine konstante Größe des Ausgabebildes bzw. Ansichtsbildes kann insbesondere dadurch erreicht werden, dass die gleiche Anzahl und Anordnung von Pixeln verwendet wird.

Das Koordinatenmessgerät oder (nicht gemäß den Ansprüchen) Mikroskop weist einen Raum zum Anordnen eines zu erfassenden Werkstücks auf. Bei manchen Typen von Koordinatenmessgeräten oder Mikroskopen ist dieser Raum relativ zu der Umgebung des Koordinatenmessgeräts oder Mikroskops beweglich. Dies ist zum Beispiel bei einem Koordinatenmessgerät mit einem in zwei zueinander senkrecht verlaufenden Richtungen beweglichen Kreuztisch der Fall, auf dem ein Messobjekt zur Vermessung angeordnet werden kann. Die Beweglichkeit kann daher in Bezug auf die Umgebung des Koordinatenmessgeräts oder Mikroskops durch eine Bewegung des Sensors und/oder durch eine Beweglichkeit des Raumes realisiert sein. In jedem Fall sind der Sensor und der Raum zum Anordnen des zu erfassenden Werkstücks relativ zueinander beweglich. Wenn in dem Raum ein Werkstück angeordnet ist, sind daher auch der Sensor und das in dem Raum angeordnete Werkstück (z. B. Messobjekt) relativ zueinander beweglich. Es wird bevorzugt, dass das Koordinatensystem der dreidimensionalen Szene in dem Raum zum Anordnen des zu erfassenden Werkstücks ruht, d.h. ein Koordinatensystem dieses Raumes ist. Visualisierte relative Bewegungen des Sensors und des Raumes und somit der dreidimensionalen Szene können in diesem Fall daher bei den unterschiedlichen Typen von Koordinatenmessgeräten oder Mikroskopen in gleicher Weise dargestellt werden.

Wie beschrieben wird ein anderes zweidimensionales Ansichtsbild der Szene erzeugt, das einen entsprechend der Relativbewegung von Sensor und Raum verschobenen Teilbereich der dreidimensionalen Szene erfasst, wenn sich das Sensorbild bzw. die Darstellung des Sensors in dem Ausgabebild von dem zentralen Bereich des Ansichtsbildes über zumindest einen der beiden einander gegenüberliegenden Ränder hinweg erstrecken würde. Auf konkrete Situationen und Ausgestaltungen wird noch näher eingegangen. Auch kann es Situationen geben, in denen ausnahmsweise kein anderes Ansichtsbild als zuvor für das Ausgabebild verwendet wird. Auch darauf wird noch näher eingegangen. Wenn jedoch ein anderes Ansichtsbild der Szene erzeugt wird, dann erfasst dieses einen entsprechend der Relativbewegung verschobenen Teilbereich der dreidimensionalen Szene. "Entsprechend" bedeutet in diesem Zusammenhang insbesondere, dass bezüglich eines zweidimensionalen kartesischen Koordinatensystems in der Bildebene des Ansichtsbildes, die auch die Bildebene des Ausgabebildes ist, eine Bewegungskomponente der Verschiebung und eine Bewegungskomponente der Bewegung des Sensors relativ zu dem Raum die gleiche Richtung haben. Insbesondere sind die Bewegungskomponenten auf eine Koordinatenachse des Koordinatensystems bezogen, die senkrecht zu dem Rand verläuft, über den hinweg sich das Sensorbild bzw. die Darstellung des Sensors erstrecken würde. In einer speziellen Ausgestaltung kann die Richtung der Verschiebung mit der Richtung der Bewegung des Sensors relativ zu dem Raum übereinstimmen. Dies ist jedoch im allgemeinen nicht der Fall. Jedoch findet die Verschiebung bezüglich der senkrecht zu dem Rand verlaufenden Richtung nicht entgegengesetzt zu der Bewegung des Sensors relativ zu dem Raum statt, da sich das Sensorbild bzw. die Darstellung des Sensors in diesem Fall noch weiter von dem zentralen Bereich über den Rand hinaus erstrecken würde.

Bei allen Bildern, die zur Erzeugung des Ausgabebildes verwendet werden, und bei dem Ausgabebild selbst handelt es sich insbesondere um digitale Bilder, die insbesondere aus einer zweidimensionalen Anordnung von Bildelementen (Pixeln) zusammengesetzt sind. Bekannt ist es, dass jedes Bildelement an einer Position in einem regelmäßigen zweidimensionalen Koordinatensystem des Bildes positioniert ist und bei Darstellung durch eine Bilddarstellungseinrichtung an einer entsprechenden Position des Darstellungsmediums (zum Beispiel Bildschirm oder Projektionsfläche) dargestellt wird. Von einem Bild wird auch dann gesprochen, wenn ein entsprechender Datensatz vorliegt. Ein Bild erfordert daher im Allgemeinen nicht, dass es tatsächlich dargestellt wird. Andererseits ist ein entsprechender Datensatz aber immer darstellbar, z. B. auf einem Bildschirm.

Es kann vorkommen, dass die dreidimensionale Szene im Vergleich zu einer vorhergehenden Erzeugung des Ausgabebildes vergrößert oder verkleinert dargestellt werden soll, entsprechend der aus der Kameratechnik bekannten Zoom-Funktion. In diesem Fall kann bereits wegen der Vergrößerung nicht dasselbe Ansichtsbild für das zu erzeugende Ausgabebild verwendet werden. Bevorzugt wird, dass in diesem Fall die einander gegenüberliegenden Ränder in Bezug auf das zu verwendende Ansichtsbild neu festgelegt werden und dann geprüft wird, ob das Sensorbild oder die Darstellung des Sensors sich von dem zentralen Bereich zwischen den einander gegenüberliegenden Rändern über zumindest einen der beiden einander gegenüberliegenden Ränder hinweg erstrecken würde. Wenn dies der Fall ist, kann, optional abhängig davon, ob zumindest ein weiteres Kriterium erfüllt ist, ein anderes zweidimensionales Ansichtsbild erzeugt werden und für das Ausgabebild verwendet werden. Dieses andere zweidimensionale Ansichtsbild zeigt dann einen verschobenen, aber nicht erneut vergrößerten oder verkleinerten Teilbereich der dreidimensionalen Szene. Mit der Erzeugung des anderen zweidimensionalen Ansichtsbilds kann in diesem Fall eine Relativbewegung des Sensors und des Raumes zum Anordnen des zu erfassenden Werkstücks berücksichtigt werden und/oder das Sensorbild oder die Darstellung des Sensors an einer für die Visualisierung besser geeigneten Position (z.B. einer zentraleren Position in dem Ausgabebild) erreicht werden.

Der Rand kann insbesondere nach einem Zoom-Vorgang, aber auch in anderen Fällen oder generell, in Bezug auf das Ansichtsbild nach einer vorgegebenen Vorschrift festgelegt werden. Z.B. kann vorgegeben sein, in welchem Abstand zum Außenrand des Ansichtsbildes der Rand verläuft. Dieser Abstand kann auch Null sein, d.h. der Rand kann mit dem Außenrand zusammenfallen. Optional kann der Abstand für jeden Rand (z. B. oberer Rand, unterer Rand, rechter Rand und linker Rand) individuell vorgegeben sein. Bevorzugt wird jedoch, dass derselbe Abstand für zumindest die jeweils einander gegenüberliegenden Ränder und vorzugsweise für alle Ränder vorgegeben ist. Z. B. kann der Abstand in Form der Anzahl von Pixeln des Ansichtsbildes vorgegeben sein oder, wenn die Pixelgröße des Ansichtsbildes von der des Ausgabebildes abweicht, der Anzahl von Pixeln des Ausgabebildes.

Gemäß einer Ausgestaltung des Verfahrens und der Anordnung sind bezüglich beider der zwei Richtungen, die den zwei Dimensionen des zweidimensionalen Ansichtsbildes entsprechen, jeweils einander gegenüberliegende Ränder vordefiniert, zwischen denen sich der zentrale Bereich des Ansichtsbildes befindet, wobei somit vier Ränder vordefiniert sind, die einen geschlossenen umlaufenden Randverlauf haben.

Insbesondere können die einander gegenüberliegenden Ränder, die bezüglich zumindest einer der zwei Richtungen des zweidimensionalen Ansichtsbildes vordefiniert sind, jeweils geradlinig parallel zueinander verlaufen. Insbesondere können daher insgesamt vier Ränder in Parallelogrammform oder Rechteckform einen zentralen Bereich des Ansichtsbildes umlaufen. Ferner wird bevorzugt, dass die Ränder jeweils parallel zu einem Außenrand des Ansichtsbildes verlaufen, wobei "parallel" auch den Fall mit einschließt, dass ein Rand oder alle Ränder mit den Außenrändern des Ansichtsbildes zusammenfallen.

Die Erfindung ist jedoch nicht auf parallel zu den Außenrändern des Ansichtsbildes verlaufende Ränder oder auf geradlinig verlaufende Ränder beschränkt. Vielmehr können die Ränder Abschnitte eines insgesamt umlaufenden Randverlaufs sein. Dabei kann der Randverlauf zum Beispiel elliptisch oder kreisförmig sein oder unregelmäßig verlaufen. Es ist auch möglich, dass kein insgesamt umlaufender Randverlauf durch die Ränder gebildet wird. Zum Beispiel wenn lediglich in einer der zwei Richtungen des zweidimensionalen Ansichtsbildes geprüft wird, ob sich das Sensorbild von dem zentralen Bereich über zumindest einen der beiden einander gegenüberliegenden Ränder hinweg erstrecken würde, können lediglich zwei einander gegenüberliegende Ränder beliebiger Form vor definiert sein und für die Prüfung verwendet werden. Auch ist es möglich, dass zwar für beide Richtungen des zweidimensionalen Ansichtsbildes geprüft wird und die insgesamt vier Ränder jeweils paarweise einander gegenüberliegenden, jedoch keinen durchgehenden umlaufenden Randverlauf haben.

Die Prüfung, ob sich das Sensorbild bzw. die Darstellung des Sensors von dem zentralen Bereich über zumindest einen der beiden einander gegenüberliegenden Ränder hinweg erstrecken würde, kann insbesondere bezüglich beider Richtungen des zweidimensionalen Ansichtsbildes erfolgen, d. h. es können für das Ansichtsbild bezüglich jeder der zwei Richtungen einander gegenüberliegende Ränder existieren. Ferner kann für jede der beiden Richtungen gegebenenfalls eine Verschiebung des durch das Ansichtsbild erfassten Teilbereichs der dreidimensionalen Szene stattfinden.

Insbesondere kann bei einer Ausgestaltung des Verfahrens oder der Anordnung, wenn festgestellt wird, dass sich
- (im Fall der Darstellung des Sensorbildes) das Sensorbild oder
- (im Fall der Darstellung des Sensors) die Darstellung des Sensors von dem zentralen Bereich des Ansichtsbildes über lediglich einen der beiden einander gegenüberliegenden Ränder hinweg erstrecken würde, der Teilbereich der dreidimensionalen Szene so weit verschoben werden, dass sich
- (im Fall der Darstellung des Sensorbildes) das Sensorbild oder
- (im Fall der Darstellung des Sensors) die Darstellung des Sensors in dem Ansichtsbild zwischen den beiden einander gegenüberliegenden Rändern befindet. Im Fall der Anordnung ist die Bestimmungseinrichtung entsprechend ausgestaltet. Diese Ausgestaltung des Verfahrens und der Anordnung betrifft insbesondere die Situation, in der sich das Sensorbild bzw. die Darstellung des Sensors in dem vorhergehend erzeugten Ausgabebild vollständig zwischen den einander gegenüberliegenden Rändern befindet, d. h. nicht größer als der Abstand zwischen den Rändern ist.

Insbesondere kann bei einer Ausgestaltung des Verfahrens oder der Anordnung, wenn festgestellt wird, dass sich
- (im Fall der Darstellung des Sensorbildes) das Sensorbild oder
- (im Fall der Darstellung des Sensors) die Darstellung des Sensors von dem zentralen Bereich über die beiden einander gegenüberliegenden Ränder hinweg erstrecken würde, der Teilbereich der dreidimensionalen Szene so weit verschoben wird, dass
- (im Fall der Darstellung des Sensorbildes) das Sensorbild oder
- (im Fall der Darstellung des Sensors) die Darstellung des Sensors
in dem Ausgabebild, das entsprechend den zwei Richtungen eine Bildebene aufweist,
a) um eine Entfernung relativ zu der dreidimensionalen Szene verschoben erscheint, die gleich dem durch die Relativbewegung zurückgelegten Weg multipliziert mit einem vorgegebenen Faktor ist, und/oder
b) in einer Verschiebungsrichtung relativ zu der dreidimensionalen Szene verschoben erscheint, die gleich der Bewegungsrichtung der Relativbewegung projiziert auf die Bildebene des Ausgabebildes ist.

Im Fall der Anordnung ist die Bestimmungseinrichtung entsprechend ausgestaltet. Diese Ausgestaltung des Verfahrens und der Anordnung entspricht insbesondere der Situation, dass sich das Sensorbild bzw. die Darstellung des Sensors auch bei dem vorhergehend erzeugten Ausgabebild aus dem zentralen Bereich über beide einander gegenüberliegenden Ränder hinweg erstreckt. Insbesondere kann der genannte Faktor, der mit dem durch die Relativbewegung zurückgelegten Weg multipliziert wird, Eins sein. In diesem Fall bleibt die Darstellung des Sensors bzw. das Sensorbild an derselben Position bezüglich des Ausgabebildes.

Der folgende Vorteil bezieht sich auf die beiden unmittelbar zuvor beschriebenen Ausgestaltungen: Insbesondere wenn sich der Sensor kontinuierlich oder mehrfach wiederholt relativ zu dem Raum bewegt, kann bei wiederholter Feststellung, dass sich das Sensorbild über einen der einander gegenüberliegenden Ränder hinweg erstrecken würde, und entsprechender Erzeugung eines verschobenen Ansichtsbildes der Szene gewährleistet werden, dass ein geeignetes Ansichtsbild gemeinsam mit dem Sensorbild bzw. der Darstellung des Sensors durch Darstellung des Ausgabebildes darstellbar ist. Es findet somit eine Nachführung des bei Darstellung des Ausgabebildes dargestellten Teilbereichs der Szene statt.

Insbesondere kann sich bei einer Ausgestaltung des Verfahrens oder der Anordnung
- (im Fall der Darstellung des Sensorbildes) das Sensorbild oder
- (im Fall der Darstellung des Sensors) die Darstellung des Sensors bezüglich zumindest einer der beiden Richtungen des Ansichtsbildes zunächst nicht zwischen den einander gegenüberliegenden Rändern des Ansichtsbildes befinden, der Sensor sich dann derart relativ zu dem Raum bewegen, dass sich bei der wiederholten Erzeugung des Ausgabebildes
- (im Fall der Darstellung des Sensorbildes) ein Zentrum des Sensorbildes oder
- (im Fall der Darstellung des Sensors) ein Zentrum der Darstellung des Sensors und ein Zentrum des Ansichtsbildes einander nähern, wobei bei der wiederholten Erzeugung des Ausgabebildes erst dann ein anderes zweidimensionales Ansichtsbild aus den Daten der dreidimensionalen Szene erzeugt wird, welches einen entsprechend der Relativbewegung verschobenen Teilbereich der dreidimensionalen Szene erfasst, wenn
- (im Fall der Darstellung des Sensorbildes) das Sensorbild oder
- (im Fall der Darstellung des Sensors) die Darstellung des Sensors
zumindest einmal vollständig zwischen den zwei einander gegenüberliegenden Rändern liegt oder zumindest einmal sich von dem zentralen Bereich über beide einander gegenüberliegende Ränder hinweg erstreckt. Im Fall der Anordnung ist die Bestimmungseinrichtung entsprechend ausgestaltet.

Die Ausgangssituation dieser Ausgestaltung, nämlich dass sich das Sensorbild bzw. die Darstellung des Sensors zunächst außerhalb des Bereichs zwischen den einander gegenüberliegenden Rändern befindet, kann daher zu den beiden zuvor genannten Situationen führen, für die ebenfalls Ausgestaltungen der Erfindung beschrieben wurden. Die Aussetzung der Nachführung des durch das Ansichtsbild dargestellten Teilbereichs der Szene erlaubt es, dass das Sensorbild bzw. die Darstellung des Sensors zunächst mit einem für die gemeinsame Darstellung geeigneten Teilbereich der Szene zusammenfällt und erst dann die Nachführung der Darstellung der Szene stattfindet.

Das Verfahren zum Visualisieren kann insbesondere als Teil eines Verfahrens zum Steuern eines Betriebes des Koordinatenmessgeräts oder (nicht beansprucht) Mikroskops ausgeführt werden, wobei das auf der Bilddarstellungseinrichtung dargestellte Ausgabebild bei der Steuerung des Betriebes genutzt wird. Ein Nutzer kann die wiederholte Darstellung des Ausgabebildes bei gegebenenfalls stattfindender Nachführung der Darstellung der Szene entsprechend der Bewegung des Sensors relativ zu dem Raum insbesondere für die Erstellung (insbesondere Programmierung) und/oder die Überprüfung eines Messablaufs des Koordinatenmessgeräts oder eines Betriebes des Mikroskops nutzen. Die wiederholte Darstellung kann daher während der Erstellung eines Messablaufs und/oder während einer Ausführung eines Messablaufs stattfinden. Insbesondere steuert der Nutzer während der Erstellung eines Messablaufs den Sensor in eine andere Position, erhält dadurch ein anderes Ausgabebild mit nachgeführter Darstellung der Szene. Dadurch ist ihm beispielsweise die Auswahl eines in dem Ausgabebild dargestellten Messobjekts erleichtert.

Die Prüfung, ob sich das Sensorbild oder die Darstellung des Sensors aus dem zentralen Bereich des Ansichtsbildes über zumindest einen Rand hinweg erstreckt, und die Feststellung, ob sich das Sensorbild oder die Darstellung des Sensors überhaupt zwischen den zwei einander gegenüberliegenden Rändern befindet, kann ausgeführt werden, sobald die Lage des Sensorbildes bzw. der Darstellung des Sensors und die Lage des Randes oder der Ränder in Bezug auf ein gemeinsames Koordinatensystem bekannt sind. Beispielsweise kann die Prüfung und/oder Feststellung daher anhand des oben erwähnten dreidimensionalen Datensatzes stattfinden. Alternativ oder zusätzlich kann die Prüfung und/oder Feststellung in Bezug auf ein zweidimensionales Koordinatensystem des Ansichtsbildes ausgeführt werden.

Insbesondere kann daher vorab die Position und optional auch die Ausrichtung des Sensors relativ zu dem Raum bestimmt werden, beispielsweise durch Kalibrierung. Hierzu kann in dem Raum zumindest ein Kalibrierobjekt angeordnet werden, das von dem Sensor erfasst wird. Ferner kann anhand der von dem Sensor erzeugten Erfassungsdaten und anhand der Messdaten eines Positionsmesssystems des Koordinatenmessgeräts oder (nicht beansprucht) Mikroskops, die die Position und optional die Ausrichtung des Sensors bezüglich des Koordinatenmessgeräts oder Mikroskops wiedergeben, der Bezug zu der Position und optional der Ausrichtung des Sensors bezüglich des Raumes hergestellt werden. Auch die Position und Ausrichtung der Szene oder eines Teils der Szene relativ zu dem Raum kann durch Kalibrierung ermittelt werden. Dies kann zum Beispiel ein Sensor-Magazin oder andere Anbau- und Aufbauteile betreffen, die nicht feste Bestandteile des Koordinatenmessgeräts oder Mikroskops sind, aber Teile der Szene sind. Zum Beispiel werden diese in sprechender Weise wie das genannte Kalibrierobjekt von dem Sensor erfasst. Soweit die Szene virtuelle Daten und/oder Planungsdaten (z. B. CAD Daten) zum Beispiel eines zu erfassenden Werkstücks aufweist, kann in gleicher Weise eine Kalibrierung ausgeführt werden. Zum Beispiel wird ein Messobjekt, das den Planungsdaten entspricht, von dem Sensor erfasst und werden die Planungsdaten anhand charakteristischer Merkmale des Messobjekts in dem Raum registriert, sodass die Planungsdaten dann in Bezug auf ein Koordinatensystem des Raumes vorliegen. Alternativ oder zusätzlich zu dem Sensor, dessen Sensorsignale oder dessen Darstellung visualisiert werden soll, kann eine Kamera oder ein Kamerasystem zur Registrierung benutzt werden, wenn diese Kamera oder das Kamerasystem einen großen Erfassungsbereich hat, der der gesamten Szene oder zumindest einem Großteil der Szene entspricht. Von der Kamera oder dem Kamerasystem erfasste Objekte und/oder Merkmale von Objekten können in der Szene identifiziert werden und auf diese Weise kann die Registrierung erreicht werden. Alternativ oder zusätzlich kann ein Nutzer zumindest Teile der Szene durch manuelle Steuerung in dem Koordinatensystem des Raumes registrieren.

Ausführungsbeispiele der Erfindung werden nun unter Bezugnahme auf die beigefügte Zeichnung beschrieben. Die einzelnen Figuren der Zeichnung zeigen:
- Fig. 1: ein Koordinatenmessgerät mit einer beweglichen Werkstückaufnahme und einem beweglichen Sensor,
- Fig. 2: eine schematische Ansicht einer Darstellung eines Ausgabebildes, wobei ein Sensorbild in einem zentralen Bereich eines Ansichtsbildes einer dreidimensionalen Szene liegt, und zwar innerhalb der Ränder des Ansichtsbildes, die zusätzlich zu den Außenrändern des Ansichtsbildes definiert sind,
- Fig. 3: eine Darstellung ähnlich der in Fig. 2, wobei jedoch im Unterschied zu Fig. 2 die zusätzlich definierten Ränder anders relativ zu den Außenrändern des Ansichtsbildes positioniert sind,
- Fig. 4: die Darstellung gemäß Fig. 2, wobei jedoch das Sensorbild aufgrund einer Relativbewegung zu der Szene in eine Richtung nach links oben verschoben ist,
- Fig. 5: eine Darstellung gemäß Fig. 4, wobei jedoch ein anderes Ansichtsbild Teil der Darstellung ist und der durch das andere Ansichtsbild dargestellte Teilbereich der Szene so verschoben ist, dass sich das Sensorbild vollständig innerhalb des zentralen Bereichs innerhalb der zusätzlich definierten Ränder befindet,
- Fig. 6: eine Darstellung ähnlich der in Fig. 2, wobei jedoch das Sensorbild größer ist als das Ansichtsbild und die Ränder des Sensorbildes vollständig außerhalb der zusätzlich definierten Ränder des Ansichtsbildes liegen,
- Fig. 7: eine Darstellung wie in Fig. 6, wobei jedoch das Sensorbild nach rechts relativ zu dem Ansichtsbild verschoben ist und wobei keine Verschiebung des von dem Ansichtsbild dargestellten Teilbereichs der Szene stattgefunden hat,
- Fig. 8: eine Darstellung wie in Fig. 6 und Fig. 7, wobei jedoch bei derselben Verschiebung des Sensorbildes relativ zu dem Ansichtsbild wie bei Fig. 7 eine Verschiebung des von dem Ansichtsbild dargestellten Teilbereichs der Szene stattgefunden hat,
- Fig. 9: eine Darstellung ähnlich der in Fig. 2, wobei jedoch das Sensorbild vollständig außerhalb der zusätzlich für das Ansichtsbild definierten Ränder liegt und daher bei Relativbewegung des Sensors und der Szene keine Nachführung des von dem Ansichtsbild dargestellten Teilbereichs der Szene stattfindet,
- Fig. 10: eine Darstellung wie in Fig. 9, wobei jedoch eine Relativbewegung des Sensors und der Szene stattgefunden hat, sodass das Sensorbild nun bezüglich einer der beiden linear unabhängigen Richtungen der Sensorbildebene zwischen den zusätzlich definierten Rändern des Ansichtsbildes liegt, und
- Fig. 11: ein Flussdiagramm zur Darstellung eines Ausführungsbeispiels eines Verfahrens zur Visualisierung eines Sensorbildes oder einer Darstellung eines Sensors gemeinsam mit einem Ansichtsbild einer Szene.

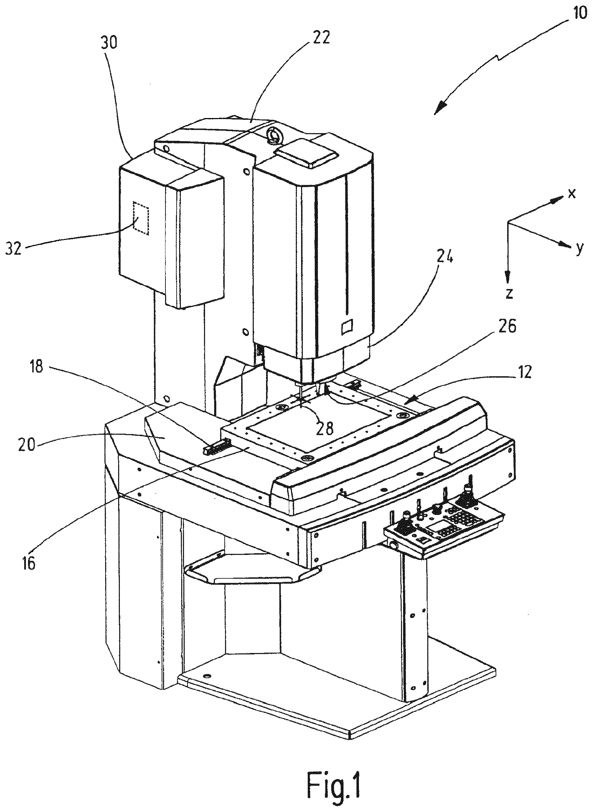

Fig. 1 zeigt ein Koordinatenmessgerät 10 gemäß einem Ausführungsbeispiel der Erfindung. Das Koordinatenmessgerät 10 besitzt eine Werkstückaufnahme 12, die hier in Form eines Kreuztisches, d. h. eines in den horizontalen Richtungen x und y des kartesischen Koordinatensystems x-y-z des Koordinatenmessgeräts 10 realisiert ist. Derartige Kreuztische werden auch als x-y-Tische bezeichnet. Die Werkstückaufnahme 12 dient zum Positionieren eines Messobjekts (nicht in Fig. 1 dargestellt), das von dem Koordinatenmessgerät 10 vermessen werden kann.

Die Werkstückaufnahme 12 besitzt in diesem Fall ein Oberteil 16, das entlang zweier Führungsschienen 18 in einer ersten Richtung, der x-Richtung, beweglich ist. Die Führungsschienen 18 sind auf einem Unterteil 20 der Werkstückaufnahme 12 angeordnet, das entlang weiterer Führungsschienen (in Fig. 1 nicht zu erkennen) in einer zweiten Raumrichtung, der y-Richtung, beweglich ist.

Mit der Bezugsziffer 22 ist eine Säule bezeichnet, entlang der ein Schlitten 24 in einer dritten Raumrichtung, der z-Richtung, beweglich ist. Der Schlitten 24 trägt einen optischen Sensor 26 und kann optional außerdem einen taktilen Sensor 28 tragen.

Die vorliegende Erfindung ist jedoch nicht auf derartige Koordinatenmessgeräte beschränkt und kann gleichermaßen bei einem Koordinatenmessgerät angewendet werden, das eine andere als in Fig. 1 dargestellte Haltestruktur für den optischen Sensor mit anderen Bewegungseinrichtungen zur Bewegung des Sensors aufweist. Z. B. kann das Koordinatenmessgerät anstelle der Haltestruktur mit dem Kreuztisch 12 und der Säule 22 eine Haltestruktur in Brückenbauweise, Portalbauweise, Horizontalarmbauweise oder anderen Bauweisen einschließlich Hexapoden besitzen.

Mit der Bezugsziffer 30 ist in Fig. 1 eine Auswerte- und Steuereinheit bezeichnet, die in dem Ausführungsbeispiel an der feststehenden Säule 22 angeordnet ist. Die Auswerte- und Steuereinheit 30 dient einerseits dazu, den jeweils verwendeten Sensor 26, 28 in eine gewünschte Messposition relativ zu einem Messobjekt auf der Werkstückaufnahme 12 zu bringen.

Andererseits ist die Auswerte- und Steuereinheit 30 in der Lage, Koordinaten von ausgewählten Messpunkten an dem Messobjekt und im Anschluss daran geometrische Eigenschaften des Messobjekts zu bestimmen. Ein Prozessor 32 der Auswerte- und Steuereinheit 30, von dem Signale des optischen Sensors 26 durch Ansteuerung eines in Fig. 1 nicht dargestellten Bildschirms gemeinsam mit einem bestimmten Bildausschnitt der 3D-Szene visualisiert werden können, ist schematisch dargestellt.

Auch die Auswerte- und Steuereinheit 30 kann anders als dargestellt realisiert sein. Zum Beispiel kann sie auf zumindest zwei separate Komponenten aufgeteilt sein, wobei insbesondere die Auswerteeinheit dann als von dem Koordinatenmessgerät separater Computer realisiert sein kann. Alternativ oder zusätzlich kann statt eines Bildschirms eine andere Bilddarstellungseinrichtung verwendet werden, zum Beispiel ein Bildprojektor.

In allen Fällen, auch den nicht genannten Fällen, kann die Bildausschnitt-Bestimmungseinrichtung, welche den Bildausschnitt der 3D-Szene bestimmt, der gemeinsam mit dem von dem optischen Sensor erzeugten Bild dargestellt werden soll, Teil der Auswerte- und Steuereinheit sein und/oder durch eine von dem Koordinatenmessgerät separate Einrichtung wie beispielsweise ein Computer realisiert sein. Auch die Kombinationseinrichtung, welche das von dem optischen Sensor erzeugte Bild mit dem gemeinsam darzustellenden Bildausschnitt der 3D-Szene kombiniert, kann Teil der Auswerte- und Steuereinheit sein und/oder durch eine von dem Koordinatenmessgerät separate Einrichtung wie beispielsweise ein Computer realisiert sein, insbesondere durch den selben Computer, der auch die Bestimmungseinrichtung aufweist. Zum Beispiel kann ein Prozessor der Auswerte- und Steuereinheit, insbesondere der oben genannte Prozessor 32, oder ein Prozessor des separaten Computers gesteuert durch Software die Funktion der Bestimmungseinrichtung und/oder die Kombinationseinrichtung bereitstellen und ausführen.

Die Beweglichkeit eines Mikroskops kann in gleicher Weise wie bei dem in Fig. 1 dargestellten Koordinatenmessgerät realisiert sein, d.h. das Werkstück oder Beobachtungsobjekt kann von einer in einer Richtung oder in zwei unabhängigen Richtungen beweglichen Aufnahme aufgenommen sein und der optische Sensor kann in einer Richtung beweglich sein, die von der Bewegungsrichtung oder den Bewegungsrichtungen der Aufnahme unabhängig ist, insbesondere linear unabhängig ist.

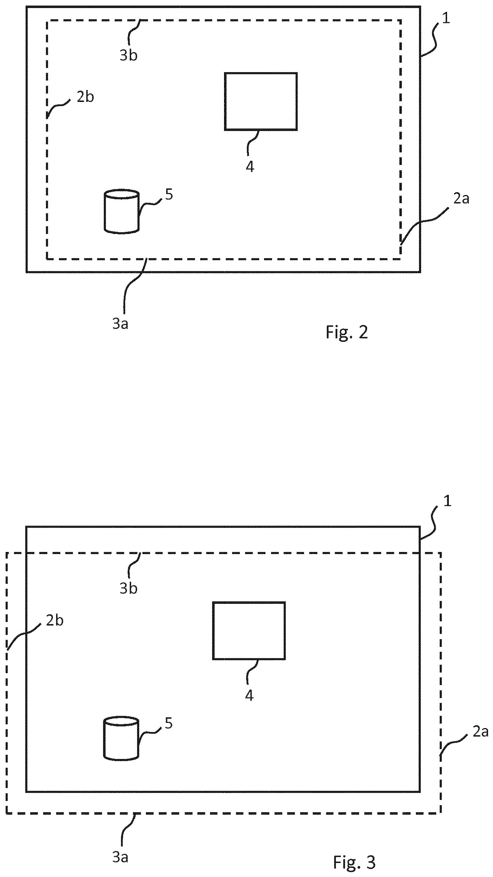

Anhand der schematischen Darstellungen in Fig. 2 bis Fig. 10 werden nun Situationen bei der Darstellung eines Sensorbildes und eines Ansichtsbildes einer dreidimensionalen Szene beschrieben. In allen Situationen kann statt des Sensorbildes eine zweidimensionale Darstellung eines Sensors eines Koordinatenmessgeräts verwendet werden. Ferner alternativ kann es sich bei dem Sensorbild um ein Bild eines Sensors eines Mikroskops handeln.

Insbesondere ist das Sensorbild oder die Darstellung des Sensors rechteckig wie schematisch in Fig. 2 bis Fig. 10 gezeigt. Jedoch ist die Erfindung nicht auf eine rechteckige zweidimensionale Darstellung beschränkt. Z.B. könnte die Darstellung eines Sensors einen anderen als rechteckigen Außenrand haben. Wenn der Außenrand gekrümmt ist, ist er bei der Darstellung des Sensors oder des Sensorbildes konvex, sodass in jeder der beiden linear unabhängigen Richtungen der Bildebene und in den entgegengesetzten Richtungen eindeutig ein am weitesten außen liegender Punkt des Außenrandes definiert ist. Dieser am weitesten außen liegende Punkt kann dann für die Prüfung verwendet werden, ob er außerhalb eines der zusätzlich für das Ansichtsbild definierten Ränder liegt.

In der in Fig. 2 dargestellten Situation und auch in allen weiteren in Fig. 3 bis Fig. 10 dargestellten Situationen verlaufen die Außenränder des Sensorbildes, wobei stattdessen ein zweidimensionales Bild mit einer Sensordarstellung verwendet werden kann, parallel zu den vier geradlinig verlaufenden zusätzlich vorgegebenen Rändern des Ansichtsbildes. Obwohl dies üblichen Situationen bei der gemeinsamen Darstellung von jeweils zumindest zwei zweidimensionalen Bildern entspricht, ist die Erfindung nicht darauf beschränkt. Vielmehr könnte z.B. das in Fig. 2 dargestellte Sensorbild 4 um einen Winkel, der nicht 90° beträgt, gegenüber den Rändern des Ansichtsbildes gedreht sein. Wie bei dem zuvor bereits erwähnten Fall konvexer Außenränder des Sensorbildes oder der Darstellung des Sensors kann dennoch eindeutig geprüft werden, ob das Sensorbild über einen der Ränder des Ansichtsbildes hinausragt. Dies wird vorzugsweise bezüglich jedes der vier Ränder des Ansichtsbildes in einer Richtung senkrecht zum Verlauf des Randes geprüft.

Bei digitalen aus Pixeln bestehenden zweidimensionalen Bildern sind die für die Prüfung zu verwendenden Ränder des Ansichtsbildes vorzugsweise so definiert, dass sie jeweils entlang einer Reihe oder einer Spalte von Pixeln verlaufen. Würde sich bei der Erzeugung des Ausgabebildes aus einem Ansichtsbild und einem Sensorbild ergeben, dass das Sensorbild teilweise außerhalb des jeweils betrachteten Randes, d.h. an dessen Außenseite liegen würde, dann würde stattdessen wie bereits zuvor beschrieben ein anderes Ansichtsbild verwendet werden. Bezüglich der Lage der Pixel des Sensorbildes bezüglich des Randes bedeutet dies, dass bei dem nicht verschobenen Ansichtsbild zumindest ein Pixel oder eine Reihe oder Spalte von Pixeln von dem zentralen Bereich des Ansichtsbildes aus gesehen außerhalb und somit jenseits des Randes liegt. Die Pixelreihen und Pixelspalten verlaufen insbesondere parallel zu den Rändern oder fallen mit einem Rand zusammen, wie bereits erwähnt wurde. Wenn daher das am weitesten außen liegende Pixel oder die am weitesten außen liegende Pixelreihe oder Pixelspalte des Sensorbildes außerhalb des Randes liegt, ist sie gegenüber dem Rand um mindestens ein Pixel versetzt.

Die Prüfung hierauf ist äquivalent zu dem Fall, dass der jeweilige Rand um ein Pixel weiter außen positioniert ist und geprüft wird, ob das Sensorbild sich von dem zentralen Bereich des Ansichtsbildes zumindest bis zu dem Rand erstreckt. Dieser äquivalente Fall fällt unter den in den Patentansprüchen definierten Fall, da eine Vorgabe der Lage oder Position eines Randes und die Prüfung, ob sich das Sensorbild oder die Darstellung des Sensors über den Rand hinweg erstrecken würde, auch eine Definition bzw. Vorgabe eines um ein Pixel weiter außen liegenden Randes impliziert, bezüglich dem geprüft wird, ob das Sensorbild den Rand erreicht. Wäre dies der Fall, dann wäre der um ein Pixel weiter innen liegende Rand überschritten. Die Prüfung auf Überschreiten des Randes fände daher implizit durch die Prüfung des Erreichens des weiter innen liegenden Randes statt. Dabei ist diese Äquivalenz nicht auf regelmäßige Pixelraster beschränkt. Auch kann der Rand so definiert sein, dass er nicht die Breite eines ganzen Pixels hat.

Fig. 2 zeigt einen Außenrand 1. Da es sich in der in Fig. 2 dargestellten Situation und in weiteren in anderen Figuren dargestellten Situationen, jedoch nicht in allen Situationen, bei dem Außenrand 1 sowohl um den Außenrand des Ansichtsbildes als auch des Ausgabebildes handelt, ist der Außenrand des Ansichtsbildes in Fig. 2 nicht mit einem separaten Bezugszeichen bezeichnet. In der in Fig. 2 dargestellten Ausführungsform verlaufen die vier geradlinigen Rändern 2a, 2b, 3a, 3b des Ansichtsbildes parallel zu entsprechenden Abschnitten des Außenrandes 1, und zwar innerhalb des Außenrandes 1. Dabei ist allerdings der Abstand der in vertikaler Richtung verlaufenden Ränder 2a, 2b zu den benachbarten Abschnitten des Außenrandes 1 größer als der Abstand der in horizontaler Richtung verlaufenden Ränder 3a, 3b zu den parallel verlaufenden Abschnitten des Außenrandes 1. Bei anderen Ausgestaltungen kann der Abstand überall gleich groß sein oder es kann jeder der für die erfindungsgemäße Prüfung verwendeten Ränder des Ansichtsbildes einen individuellen und von den anderen Rändern verschiedenen Abstand zu dem nächstbenachbarten Abschnitt des Außenrandes haben. Zur Unterscheidung der verschiedenen Ränder sind die für die Prüfung verwendeten Ränder in den Fig. 2 bis Fig. 10 gestrichelt dargestellt, wohingegen der Außenrand mittels einer umlaufenden durchgezogenen Linie dargestellt ist. Auch der Außenrand des Sensorbildes 4 ist mittels einer durchgezogenen umlaufenden Linie dargestellt. Ferner zeigt Fig. 2 einen Teil 5 der durch das Ansichtsbild dargestellten Szene. Da dieser Teil 5 sich jedenfalls während einer andauenden Betriebsphase mit wiederholter Erzeugung eines Ausgabebildes an einer festen Position der dreidimensionalen Szene befindet, verschiebt sich die Position des Abbildes des Teils 5, wenn ein anderes Ansichtsbild gewählt wird, welches einen anderen Teilbereich der Szene darstellt. Da sich das Sensorbild 4 in der in Fig. 2 dargestellten Situation vollständig innerhalb der Ränder 2, 3 des Ansichtsbildes befindet, bietet das resultierende Ausgabebild eine übersichtliche Darstellung des Sensorbildes 4 gemeinsam mit der Darstellung eines Teilbereichs der Szene durch das Ansichtsbild.

Die in Fig. 3 gezeigte Ausführungsform unterscheidet sich von der in Fig. 2 gezeigten lediglich dadurch, dass die Ränder 2a, 2b, 3a, 3b des Ansichtsbildes, die für die erfindungsgemäße Prüfung verwendet werden, in anderer Weise bezüglich des Außenrandes 1 verlaufen und anders positioniert sind. Als einziger der vier Ränder verläuft der obere Rand 3b innerhalb des Außenrandes 1. Die anderen drei Ränder 2a, 2b, 3a verlaufen außerhalb des Außenrandes 1. Das Sensorbild 4 erreicht daher bei Bewegung des Sensors relativ zu dem Raum, in dem das von dem Sensor zu erfassende Werkstück anordenbar ist, diese drei Ränder nur dann, wenn zumindest ein Teil des Sensorbildes 4 außerhalb des Außenrandes 1 liegt. Da in dem Ausführungsbeispiel der Außenrand 1 auch der Außenrand des Ausgabebildes ist, würde ein Teil des Sensorbildes 4 nicht dargestellt werden.

Bei der in Fig. 3 dargestellten Positionierung der Ränder 2a, 2b, 3a, 3b kann unmittelbar unterhalb des oberen Abschnitts des Außenrandes 1 Bildinhalt dargestellt werden, der nicht von dem Sensorbild 4 überlagert werden kann, solange sich das Sensorbild 4 nicht über sowohl den oberen Rand 3b als auch den unteren Rand 3a hinaus erstreckt oder das Sensorbild 4 vollständig außerhalb des zentralen Bereichs des Ansichtsbildes liegt. In dem oberen Bereich des Ausgabebildes kann somit z.B. Bildinformation in Bezug auf eine Interaktion des Nutzers dargestellt werden, wie es z.B. bei mit bestimmten Steuerfunktionen verbundenen Bereichen eines berührungsempfindlichen Bildschirms der Fall ist.

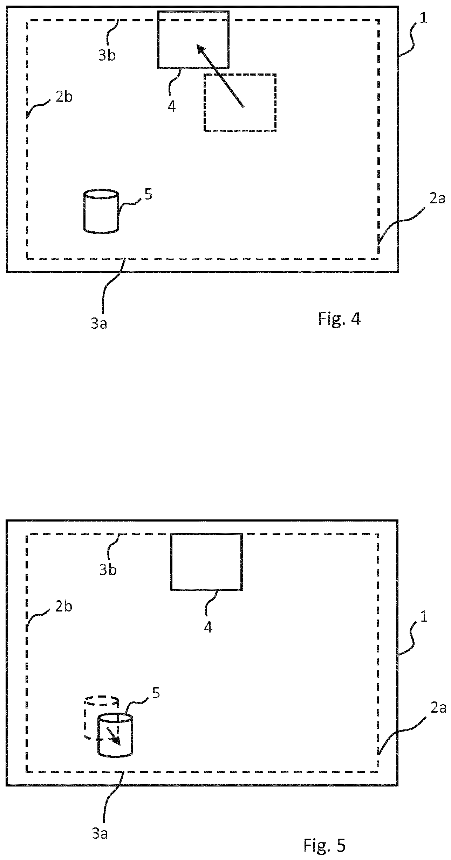

Fig. 4 zeigt die Situation wie in Fig. 2, wobei jedoch das Sensorbild 4, wie durch einen nach links oben weisenden Pfeil angedeutet ist, sich relativ zu der Szene und somit zu dem Ansichtsbild verschoben hat. Dies ist das Ergebnis einer Relativbewegung des Sensors und des Raumes. Das Ansichtsbild der Fig. 4 ist dasselbe Ansichtsbild wie das der Fig. 2. In Bezug auf das Ausgabebild hat somit keine Verschiebung des Ansichtsbildes und somit des Teils 5 stattgefunden. Das Sensorbild 4 hat aber den oberen Rand 3b aufgrund der Verschiebung überschritten. Daher wird das Ausgabebild der Fig. 4 nicht ausgegeben. Vielmehr wird festgestellt, dass sich das Sensorbild 4 von dem zentralen Bereich des Ansichtsbildes über den oberen Rand 3b hinaus erstreckt. Anhand von Fig. 5 wird nun erläutert, dass daher ein anderes Ansichtsbild erzeugt und für das Ausgabebild verwendet wird. Alternativ kann das Ausgabebild der Fig. 4 ausgegeben werden und kann zum Beispiel erst nach Empfang eines aktualisierten Sensorbildes festgestellt werden, dass sich das Sensorbild über den Rand hinaus erstreckt und eine entsprechende Verschiebung des Sensorbildes stattfinden.

Die in Fig. 5 dargestellte Situation entspricht einer über die Situation der Fig. 4 hinweg fortgesetzten Verschiebung des Sensorbildes 4 entsprechend dem in Fig. 4 dargestellten Pfeil, der nach links oben weist. Jedoch ist wie erwähnt ein anderes Ansichtsbild der Szene erzeugt worden, sodass bei der in Fig. 5 dargestellten lagerichtigen Darstellung von Sensorbild 4 und Ansichtsbild sich das Sensorbild 4 innerhalb der Ränder 2a, 2b, 3a, 3b befindet und sich insbesondere nicht über den oberen Rand hinweg erstreckt. In diesem konkreten Ausführungsbeispiel endet das Sensorbild 4 an dem oberen Rand 3b. Es könnte jedoch alternativ ein Ansichtsbild erzeugt worden sein, das bei lagerichtiger Darstellung dazu führt, dass das Sensorbild 4 in einem Abstand zu dem oberen Rand 3b endet.

Anders ausgedrückt hat sich bei der in Fig. 5 dargestellten Situation die Szene scheinbar in der Richtung des Pfeils verschoben. Diese Verschiebung hat es möglich gemacht, das Sensorbild 4 vollständig innerhalb des durch die vier Ränder 2a, 2b, 3a, 3b umrandeten zentralen Bereichs des Ansichtsbildes darzustellen. Alternativ kann die Verschiebung nicht in Richtung des dargestellten Pfeils stattfinden, sondern in einer Richtung senkrecht zu dem jeweiligen Rand, über den hinweg sich das Sensorbild erstreckt.

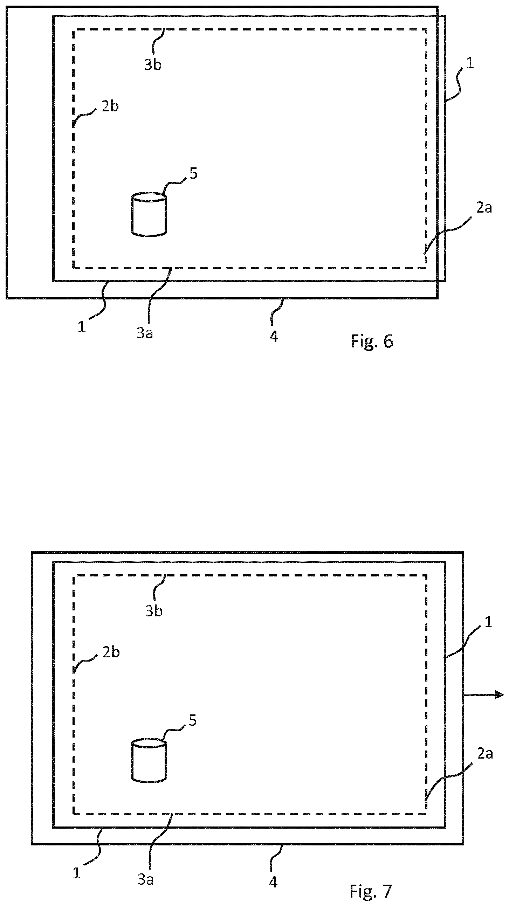

In der in Fig. 6 dargestellten Situation ist das Sensorbild 4 im Verhältnis zu dem Ansichtsbild wesentlich größer als in den Situationen der Fig. 2 bis Fig. 5. Das Sensorbild 4 ist sogar so groß, dass es nicht mehr vollständig innerhalb des Außenrandes 1 dargestellt werden kann. Wie auch bei den Fig. 2 bis Fig. 5 ist der Außenrand 1 in dem Ausführungsbeispiel sowohl der Außenrand des Ansichtsbildes als auch der Außenrand des Ausgabebildes. Daher wird in der konkreten Situation der Fig. 6 lediglich ein wenn auch überwiegender Teil des Sensorbildes 4 durch das Ausgabebild dargestellt, wobei jedoch am rechten Abschnitt des Außenrandes 1 ein schmaler Bereich des Ausgabebildes vorhanden ist, in dem sich das Sensorbild 4 nicht befindet. Alle anderen Bereiche des Ausgabebildes fallen mit Bereichen des Sensorbildes 4 zusammen. Z.B. wegen einer durchscheinenden Darstellung von Konturen der Szene ist jedoch dennoch der Teil 5 der Szene durch das Sensorbild 4 hindurch erkennbar.

Ferner verlaufen die vier Ränder 2a, 2b, 3a, 3b des Ansichtsbildes innerhalb des Außenrandes des Sensorbildes 4. Somit ist eine Situation gegeben, in der das Sensorbild 4 sich von dem zentralen Bereich des Ansichtsbildes über alle der Ränder 2a, 2b, 3a, 3b hinweg erstreckt. Diese Tatsache allein führt jedoch nicht dazu, dass zwingend ein anderes Ansichtsbild verwendet wird. Optional könnte ein anderes Ansichtsbild verwendet werden, sodass zum Beispiel die zentrale Position im Sensorbild 4 (die sich im Schnittpunkt der Diagonalen des Bildes befindet) mit der zentralen Position des Ansichtsbildes und des Ausgabebildes zusammenfällt.

Fig. 7 zeigt eine Situation wie in Fig. 6, bei der die zentralen Positionen des Sensorbildes 4 und des Ansichtsbildes bzw. des Ausgabebildes annähernd zusammenfallen. Dies ist jedoch nicht das Resultat der Verwendung eines anderen Ansichtsbildes gegenüber der Situation in Fig. 6. Vielmehr ist dies das Ergebnis einer Relativbewegung des Sensors und des Raumes zur Aufnahme des zu erfassenden Werkstücks, wie der rechts in Fig. 7 dargestellte nach rechts weisende Pfeil andeutet.

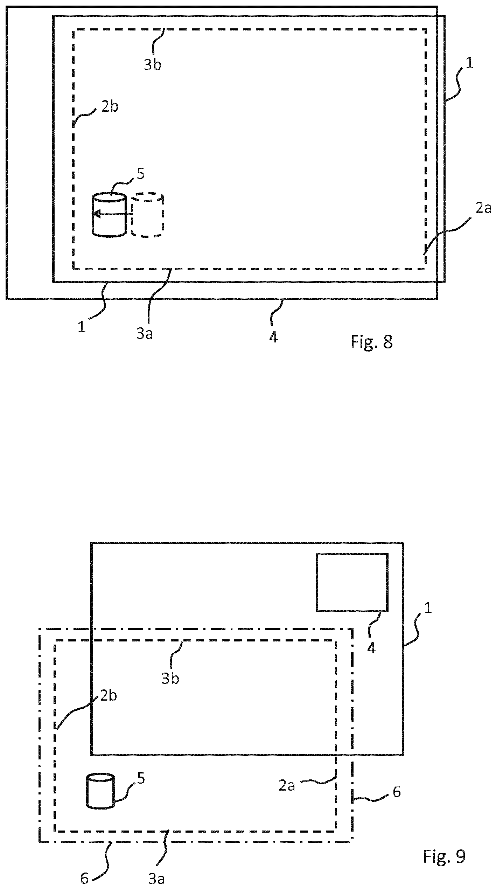

Gemäß der anhand von Fig. 6 bis Fig. 8 beschriebenen Ausführungsform wird das in Fig. 7 dargestellte Ausgabebild nicht erzeugt oder nicht ausgegeben und wird stattdessen das in Fig. 8 dargestellte Ausgabebild erzeugt und ausgegeben. Gemäß der in Fig. 8 dargestellten Situation befindet sich das Sensorbild 4 immer noch an derselben Relativposition zum Außenrand 1 und somit zum Ansichtsbild und zum Ausgabebild wie in Fig. 6. Die anhand von Fig. 7 erläuterte Relativbewegung des Sensors und des Raumes zur Aufnahme des Werkstücks hat dazu geführt, dass ein anderes Ansichtsbild erzeugt wurde, welches einen gegenüber der Situation in Fig. 6 verschobenen Teilbereich der Szene darstellt. Ähnlich wie in Fig. 5 für eine andere Ausführungsform ist dies anhand einer Verschiebung des Teils 5 der Szene nach links in entgegengesetzter Richtung der Verschiebung des Sensorbildes 4 in Fig. 7 erkennbar. In der Darstellung der Fig. 8 hat sich die Szene daher nach links verschoben. Dies hat es ermöglicht, denselben Teil des Sensorbildes 4 für das Ausgabebild zu verwenden wie in Fig. 6.

Fig. 9 zeigt eine Situation, in der der Außenrand 1 nicht mehr mit dem Außenrand 6 des Ansichtsbildes zusammenfällt. Zwar sind in dem Ausführungsbeispiel wie auch in den Ausführungsbeispielen der Fig. 2 bis Fig. 8 und wie bei möglichen anderen Ausführungsbeispielen die von dem Außenrand 1 umrandete Bildfläche und die von dem Außenrand 6 des Ansichtsbildes umrandete Bildfläche gleich groß. Eine solche gleiche Größe ist jedoch nicht zwingend erforderlich, auch wenn eine zumindest ähnliche Größe im Allgemeinen von Vorteil ist, da dann in vielen Situationen das gesamte Ansichtsbild oder der weitaus überwiegende Teil des Ansichtsbildes durch das Ausgabebild dargestellt werden kann.

In der in Fig. 9 gezeigten Situation kann derjenige Bereich des Ansichtsbildes, der den Teil 5 der Szene zeigt, nicht in dem Ausgabebild dargestellt werden. Allerdings befindet sich das Sensorbild 4 vollständig in dem Ausgabebild, d.h. innerhalb des Außenrandes 1 des Ausgabebildes. Da sich aber das Sensorbild 4 andererseits vollständig außerhalb des von den vier Rändern 2a, 2b, 3a, 3b umrandeten zentralen Bereichs des Ansichtsbildes befindet, erstreckt sich das Sensorbild 4 nicht vom zentralen Bereich über einen der Ränder oder mehrere der Ränder hinweg und wird jedenfalls nicht aus diesem Grund ein anderes Ansichtsbild der Szene erzeugt und für das Ausgabebild verwendet. Ein möglicher Grund für die Verwendung eines anderen Ansichtsbildes für das Ausgabebild in der in Fig. 9 dargestellten Situation könnte z.B. sein, dass der von dem Ansichtsbild erfasste Teilbereich der Szene vergrößert oder verkleinert wird. Wenn der Teilbereich vergrößert wird und wie bevorzugt die Größe des Ansichtsbildes nicht verändert wird, dann verkleinert sich das Sensorbild 4. Eine entsprechende resultierende Situation ist jedoch in keiner der Figuren dargestellt.

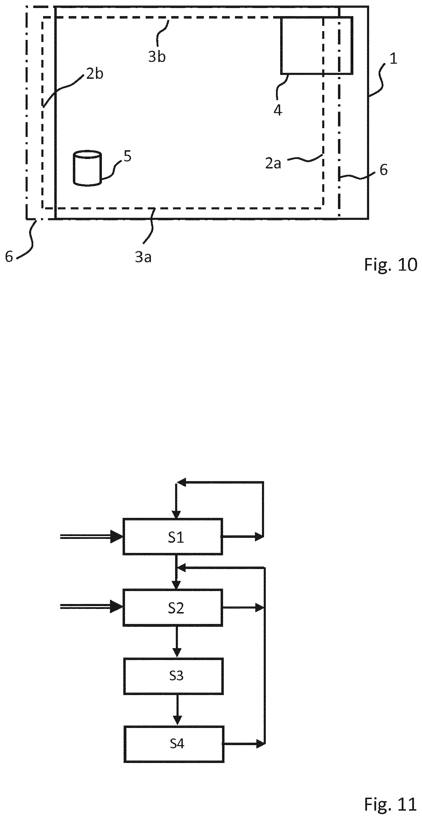

In Fig. 10 ist dargestellt, dass im Vergleich zu der in Fig. 9 dargestellten Situation aufgrund einer Relativbewegung des Sensors und des Raumes zur Aufnahme eines Werkstücks eine Verschiebung des Ansichtsbildes relativ zu dem Ausgabebild stattgefunden hat. Daher liegen die oberen und unteren Abschnitte des Außenrandes 6 des Ansichtsbildes und des Außenrandes 1 des Ausgabebildes nun überwiegend übereinander. Allerdings verlaufen die linken und rechten Abschnitte des Außenrandes 6 des Ansichtsbildes und des Außenrandes 1 des Ausgabebildes versetzt zueinander, sodass das Ansichtsbild nach links gegen das Ausgabebild versetzt verläuft.

In dieser Situation liegt nun der obere Rand des Sensorbildes 4 an der vertikalen Position des oberen Randes 3b für die Prüfung, ob ein anderes Ansichtsbild erzeugt und verwendet werden soll. Da sich das Sensorbild 4 nun teilweise innerhalb des zentralen Bereichs des Ansichtsbildes befindet und dabei sich zwischen dem unteren Rand 3a und dem oberen Rand 3b erstreckt, kann nun bezüglich der vertikalen Bildrichtung mit der Prüfung begonnen werden, ob aufgrund einer Bewegung des Sensors relativ zu dem Raum für die Aufnahme des Werkstücks ein anderes Ansichtsbild für die Erzeugung des Ausgabebildes verwendet wird. Obwohl dies in keiner der Figuren dargestellt ist, würde eine Verschiebung des Sensorbildes 4 nach oben aufgrund einer entsprechenden Relativbewegung von Sensor und Raum dazu führen, dass ein anderes Ansichtsbild erzeugt und verwendet wird, in welchem der Teil 5 der Szene gegenüber dem Sensorbild 4 nach unten versetzt ist. Dadurch würde sich das Sensorbild 4 in dem Ausgabebild wie zuvor nicht über den oberen Rand 3b hinaus erstrecken.

Das in Fig. 11 dargestellte Flussdiagramm dient der Veranschaulichung von Ausführungsbeispielen des Verfahrens zum Visualisieren von Sensorsignalen oder einer Darstellung eines Sensors. In Schritt S1 wird für eine aktuelle Anordnung des Sensors relativ zu dem Raum zur Aufnahme des zu erfassenden Werkstücks, für ein resultierendes Sensorbild oder für eine entsprechende Darstellung des Sensors und für eine gegebenes Ansichtsbild der dreidimensionalen Szene zunächst geprüft, ob bei lagerichtiger Kombination des Sensorbildes und des Ansichtsbildes in dem Ausgabebild und in Bezug auf die vorgegebenen Ränder des Ansichtsbildes das Sensorbild oder die Darstellung des Sensors vollständig außerhalb des zentralen Bereichs des Ansichtsbildes liegt, der von den vorgegebenen Rändern umlaufen wird. Wenn dies der Fall ist, wird Schritt S1 wiederholt, sobald sich die Situation verändert hat.

Wenn dagegen festgestellt wird, dass sich das Sensorbild wenigstens bezüglich einer der beiden Bildrichtungen (z.B. vertikale Richtung und horizontale Richtung) zwischen den einander gegenüberliegenden Rändern des Ansichtsbildes, die für die erfindungsgemäße Prüfung verwendet werden, befindet, dann wird das Verfahren mit Schritt S2 fortgesetzt.

In Schritt S2 wird aktualisierte Information über die Relativposition des Sensors zu dem Raum zur Aufnahme des zu erfassenden Werkstücks empfangen. Der Empfang von Information ist nicht nur bezüglich Schritt S2 in Fig. 11 durch einen nach rechts weisenden Doppellinienpfeil dargestellt. Die Relativposition des Sensors und/oder eine Veränderung der Relativposition des Sensors wird z.B. aus dem Positionsmesssystem des Koordinatenmessgeräts oder des Mikroskops erhalten. Dieses Positionsmesssystem misst die Position oder Veränderung der Position des Sensors und/oder einer Werkstückaufnahme.

Wird in Schritt S2 festgestellt, dass sich das Sensorbild aufgrund der Relativbewegung bezüglich einer zu prüfenden Richtung (z.B. vertikale Richtung oder horizontale Richtung) aus dem zentralen Bereich des Ansichtsbildes über zumindest einen Rand hinaus erstreckt, wird mit Schritt S3 fortgefahren. Anderenfalls wird Schritt S2 wiederholt, sobald aktualisierte Information zur Verfügung steht, z.B. Information über eine Relativbewegung des Sensors oder des Raumes, Information über eine Vergrößerung oder Verkleinerung des durch das Ansichtsbild dargestellten Teilbereichs der dreidimensionalen Szene und/oder Information über eine Vergrößerung oder Verkleinerung des von dem Sensor erfassten Bereichs. Letzteres ist nur dann relevant, wenn das Verfahren der Visualisierung des Sensorbildes dient und nicht lediglich der Visualisierung einer Darstellung des Sensors in Bezug auf ein Ansichtsbild.

In Schritt S3 wird ein anderes Ansichtsbild der dreidimensionalen Szene erzeugt, das insbesondere einen gleichgroßen Teilbereich der dreidimensionalen Szene wie das bisher gültige und aktuelle Ansichtsbild erfasst und das eine lagerichtige Darstellung des Sensorbildes bzw. der Darstellung des Sensors zwischen den einander gegenüberliegenden Rändern erlaubt.

Im folgenden Schritt S4 wird daraus ein entsprechendes Ansichtsbild erzeugt und ausgegeben. Auf Schritt S4 folgt wiederum Schritt S2, wenn sich die Situation geändert hat.

Bei einer nicht dargestellten Variante des Verfahrens kann in Schritt S2 bereits auch geprüft werden, ob sich bezüglich einer der beiden zu prüfenden Richtungen das Sensorbild aus dem zentralen Bereich des Ansichtsbildes über beide einander gegenüberliegenden Ränder hinaus erstreckt. In diesem Fall würde in einem folgenden Schritt geprüft, ob sich nach Erhalt aktualisierter Information daraus eine Relativbewegung von Sensor und Raum ergibt, wobei sich das Sensorbild oder die Darstellung des Sensors immer noch bezüglich der zu prüfenden Richtung aus dem zentralen Bereich des Ansichtsbildes über beide einander gegenüberliegenden Ränder hinaus erstreckt. In diesem Fall wird in einem nachfolgenden Schritt ein anderes Ansichtsbild erzeugt, das einer Verschiebung des von dem Ansichtsbild erfassten Teilbereichs der Szene entsprechend der Relativbewegung des Sensors entspricht. Beispielsweise wird hierdurch die oben anhand von Fig. 6 bis Fig. 8 beschriebene Ausführungsform realisiert. In einem nachfolgenden Schritt wird das entsprechende Ausgabebild erzeugt und ausgegeben. Das Verfahren wird dann wieder mit Schritt S2 fortgesetzt.

Anzumerken ist, dass die anhand von Fig. 11 beschriebene Verfahrensweise, die z.B. der anhand von Fig. 2, Fig. 4 und Fig. 5 beschriebenen Ausführungsform entspricht, bezüglich einer der beiden Bildrichtungen durchgeführt werden kann, wobei gleichzeitig bezüglich der anderen Bildrichtung das Verfahren ausgeführt werden kann, das z.B. der Ausführungsform entspricht, die anhand von Fig. 6 bis Fig. 8 beschrieben wurde. In diesem Fall wird ein einziges anderes Ansichtsbild erzeugt, das der Relativbewegung des Sensors und des Raumes in beiden Bildrichtungen entspricht.

### Bezugszeichenliste

- 1: Außenrand
- 2, 3: Ränder des Ansichtsbildes für Prüfung
- 4: Sensorbild
- 5: Teil der Szene
- 6: Außenrand des Ansichtsbildes
- 10: Koordinatenmessgerät
- 12: Werkstückaufnahme
- 16: Oberteil
- 18: Führungsschienen
- 20: Unterteil
- 22: Säule
- 24: Schlitten
- 26: optischer Sensor
- 28: taktiler Sensor
- 30: Auswerte- und Steuereinheit
- 32: Prozessor

## Patentansprüche

1. Verfahren zum Visualisieren von Sensorsignalen eines optischen Sensors (26) eines Koordinatenmessgeräts, wobei
- der optische Sensor (26) und ein Raum zum Anordnen eines zu erfassenden Werkstücks relativ zu einander beweglich sind,
- Daten einer dreidimensionalen Szene, die relativ zu dem Raum unbeweglich ist, empfangen werden und/oder vorliegen,
- wiederholt ein aus Bildsignalen des optischen Sensors (26) erzeugtes zweidimensionales Sensorbild (4), das in einer gegebenen Relativposition des optischen Sensors (26) und des Raumes einen Raumbereich des Raumes abbildet, mit einem aus den Daten der dreidimensionalen Szene erzeugten zweidimensionalen Ansichtsbild eines Teilbereichs der dreidimensionalen Szene lagerichtig zu einem zweidimensionalen Ausgabebild kombiniert wird und das Ausgabebild zur Darstellung durch eine Bilddarstellungseinrichtung ausgegeben wird,
- das zweidimensionale Ansichtsbild entsprechend seiner zwei Dimensionen zwei Richtungen aufweist, entlang denen Bildelemente des Ansichtsbildes darstellbar sind und bei Darstellung durch die Bilddarstellungseinrichtung auch dargestellt werden, wobei für das Ansichtsbild bezüglich zumindest einer der zwei Richtungen einander gegenüberliegende Ränder (2a, 2b, 3a, 3b) vordefiniert sind, zwischen denen sich ein zentraler Bereich des Ansichtsbildes befindet,
- wenn das Sensorbild (4) im Vergleich zu einer vorhergehenden Erzeugung des Ausgabebildes nicht mehr denselben Raumbereich abbildet, weil der optische Sensor (26) und der Raum zum Anordnen des zu erfassenden Werkstücks relativ zu einander eine Relativbewegung ausgeführt haben, bei einer wiederholten Erzeugung des Ausgabebildes geprüft wird, ob - bezogen auf ein vorhergehend erzeugtes Ausgabebild bei Verwendung desselben Ansichtsbildes wie in dem vorhergehend erzeugten Ausgabebild - sich das Sensorbild (4) von dem zentralen Bereich über zumindest einen der beiden einander gegenüberliegenden Ränder (2a, 2b, 3a, 3b) hinweg erstrecken würde, und, wenn dies der Fall ist, ein anderes zweidimensionales Ansichtsbild aus den Daten der dreidimensionalen Szene erzeugt wird, wobei das andere zweidimensionale Ansichtsbild einen entsprechend der Relativbewegung verschobenen Teilbereich der dreidimensionalen Szene erfasst.

2. Verfahren zum Visualisieren eines Sensors eines Koordinatenmessgeräts (10), wobei
- der Sensor (28) und ein Raum zum Anordnen eines zu erfassenden Werkstücks relativ zu einander beweglich sind,
- Daten einer dreidimensionalen Szene, die relativ zu dem Raum unbeweglich ist, empfangen werden und/oder vorliegen,
- wiederholt eine zweidimensionale Darstellung des Sensors (28) mit einem aus den Daten der dreidimensionalen Szene erzeugten zweidimensionalen Ansichtsbild eines Teilbereichs der dreidimensionalen Szene lagerichtig zu einem zweidimensionalen Ausgabebild kombiniert wird und das Ausgabebild zur Darstellung durch eine Bilddarstellungseinrichtung ausgegeben wird,
- das zweidimensionale Ansichtsbild entsprechend seiner zwei Dimensionen zwei Richtungen aufweist, entlang denen Bildelemente des Ansichtsbildes darstellbar sind und bei Darstellung durch die Bilddarstellungseinrichtung auch dargestellt werden, wobei für das Ansichtsbild bezüglich zumindest einer der zwei Richtungen einander gegenüberliegende Ränder (2a, 2b, 3a, 3b) vordefiniert sind, zwischen denen sich ein zentraler Bereich des Ansichtsbildes befindet,
- wenn der Sensor (28) im Vergleich zu einer vorhergehenden Erzeugung des Ausgabebildes nicht mehr an derselben Position relativ zu dem Raum angeordnet ist, weil der Sensor (28) und der Raum relativ zu einander eine Relativbewegung ausgeführt haben, bei einer wiederholten Erzeugung des Ausgabebildes geprüft wird, ob - bezogen auf ein vorhergehend erzeugtes Ausgabebild bei Verwendung desselben Ansichtsbildes wie in dem vorhergehend erzeugten Ausgabebild - sich die Darstellung des Sensors (28) von dem zentralen Bereich über zumindest einen der beiden einander gegenüberliegenden Ränder (2a, 2b, 3a, 3b) hinweg erstrecken würde, und, wenn dies der Fall ist, ein anderes zweidimensionales Ansichtsbild aus den Daten der dreidimensionalen Szene erzeugt wird, wobei das andere zweidimensionale Ansichtsbild einen entsprechend der Relativbewegung verschobenen Teilbereich der dreidimensionalen Szene erfasst.

3. Verfahren nach Anspruch 1 oder 2, wobei, wenn festgestellt wird, dass sich
- im Fall des Anspruchs 1 das Sensorbild (4) oder
- im Fall des Anspruchs 2 die Darstellung des Sensors (28) von dem zentralen Bereich über lediglich einen der beiden einander gegenüberliegenden Ränder (2a, 2b, 3a, 3b) hinweg erstrecken würde, der Teilbereich der dreidimensionalen Szene so weit verschoben wird, dass sich
- im Fall des Anspruchs 1 das Sensorbild (4) oder
- im Fall des Anspruchs 2 die Darstellung des Sensors (28) in dem Ansichtsbild zwischen den beiden einander gegenüberliegenden Rändern (2a, 2b, 3a, 3b) befindet.

4. Verfahren nach einem der Ansprüche 1 bis 3, wobei, wenn festgestellt wird, dass sich
- im Fall des Anspruchs 1 das Sensorbild (4) oder
- im Fall des Anspruchs 2 die Darstellung des Sensors (28)
von dem zentralen Bereich über die beiden einander gegenüberliegenden Ränder (2a, 2b, 3a, 3b) hinweg erstrecken würde, der Teilbereich der dreidimensionalen Szene so weit verschoben wird, dass
- im Fall des Anspruchs 1 das Sensorbild (4) oder
- im Fall des Anspruchs 2 die Darstellung des Sensors (28)
in dem Ausgabebild, das entsprechend den zwei Richtungen eine Bildebene aufweist,
a) um eine Entfernung relativ zu der dreidimensionalen Szene verschoben erscheint, die gleich dem durch die Relativbewegung zurückgelegten Weg multipliziert mit einem vorgegebenen Faktor ist, und/oder
b) in einer Verschiebungsrichtung relativ zu der dreidimensionalen Szene verschoben erscheint, die gleich der Bewegungsrichtung der Relativbewegung projiziert auf die Bildebene des Ausgabebildes ist.

5. Verfahren nach einem der vorhergehenden Ansprüche, wobei bezüglich beider der zwei Richtungen, die den zwei Dimensionen des zweidimensionalen Ansichtsbildes entsprechen, jeweils einander gegenüberliegende Ränder (2a, 2b, 3a, 3b) vordefiniert sind, zwischen denen sich der zentrale Bereich des Ansichtsbildes befindet, und wobei somit vier Ränder (2a, 2b, 3a, 3b) vordefiniert sind, die einen geschlossenen umlaufenden Randverlauf haben.

6. Verfahren nach einem der vorhergehenden Ansprüche, wobei zumindest einer (2a, 2b, 3a) der Ränder (2a, 2b, 3a, 3b) abschnittsweise oder vollständig außerhalb des Ansichtsbildes liegt.

7. Verfahren nach einem der vorhergehenden Ansprüche, wobei zumindest einer (3b) der Ränder (2a, 2b, 3a, 3b) innerhalb des Ansichtsbildes liegt.

8. Verfahren nach einem der vorhergehenden Ansprüche, wobei sich
- im Fall des Anspruchs 1 das Sensorbild (4) oder
- im Fall des Anspruchs 2 die Darstellung des Sensors (28) bezüglich zumindest einer der beiden Richtungen des Ansichtsbildes zunächst nicht zwischen den einander gegenüberliegenden Rändern (2a, 2b, 3a, 3b) des Ansichtsbildes befindet, der Sensor (28) sich dann derart relativ zu dem Raum bewegt, dass sich bei der wiederholten Erzeugung des Ausgabebildes
- im Fall des Anspruchs 1 ein Zentrum des Sensorbildes (4) oder
- im Fall des Anspruchs 2 ein Zentrum der Darstellung des Sensors (28) und ein Zentrum des Ansichtsbildes einander nähern, wobei bei der wiederholten Erzeugung des Ausgabebildes erst dann ein anderes zweidimensionales Ansichtsbild aus den Daten der dreidimensionalen Szene erzeugt wird, welches einen entsprechend der Relativbewegung verschobenen Teilbereich der dreidimensionalen Szene erfasst, wenn
- im Fall des Anspruchs 1 das Sensorbild (4) oder
- im Fall des Anspruchs 2 die Darstellung des Sensors (28)
zumindest einmal vollständig zwischen den zwei einander gegenüberliegenden Rändern (2a, 2b, 3a, 3b) liegt oder zumindest einmal sich von dem zentralen Bereich über beide einander gegenüberliegende Ränder (2a, 2b, 3a, 3b) hinweg erstreckt.

9. Verfahren nach einem der vorhergehenden Ansprüche, wobei das Verfahren zum Visualisieren als Teil eines Verfahrens zum Steuern eines Betriebes des Koordinatenmessgeräts (10) ausgeführt wird, wobei das auf der Bilddarstellungseinrichtung dargestellte Ausgabebild bei einer Steuerung des Betriebes des Koordinatenmessgeräts (10) genutzt wird.

10. Verfahren nach einem der vorhergehenden Ansprüche, wobei bei der Erzeugung des Ausgabebildes ein auf ein dreidimensionales Koordinatensystem des Raumes bezogener dreidimensionaler Datensatz verwendet wird, der die dreidimensionalen Daten der Szene und
- im Fall des Anspruchs 1 aus den Sensorsignalen erzeugte Sensordaten oder
- im Fall des Anspruchs 2 Daten zur Darstellung des Sensors (28) gemäß der aktuellen Position des Sensors (26, 28) aufweist.

11. Anordnung zum Visualisieren von Sensorsignalen eines optischen Sensors (26) eines Koordinatenmessgeräts (10), wobei der optische Sensor (26) und ein Raum zum Anordnen eines zu erfassenden Werkstücks relativ zu einander beweglich sind, wobei die Anordnung eine Schnittstelle aufweist zum Empfang von Daten einer dreidimensionalen Szene, die relativ zu dem Raum unbeweglich ist, und wobei die Anordnung aufweist:
- eine Kombinationseinrichtung, die ausgestaltet ist, wiederholt ein aus Bildsignalen des optischen Sensors (26) erzeugtes zweidimensionales Sensorbild (4), das in einer gegebenen Relativposition des optischen Sensors (26) und des Raumes einen Raumbereich des Raumes abbildet, mit einem aus den Daten der dreidimensionalen Szene erzeugten zweidimensionalen Ansichtsbild eines Teilbereichs der dreidimensionalen Szene lagerichtig zu einem zweidimensionalen Ausgabebild zu kombinieren und das Ausgabebild zur Darstellung durch eine Bilddarstellungseinrichtung auszugeben, wobei das zweidimensionale Ansichtsbild entsprechend seiner zwei Dimensionen zwei Richtungen aufweist, entlang denen Bildelemente des Ansichtsbildes darstellbar sind und bei Darstellung durch die Bilddarstellungseinrichtung auch dargestellt werden, wobei für das Ansichtsbild bezüglich zumindest einer der zwei Richtungen einander gegenüberliegende Ränder (2a, 2b, 3a, 3b) vordefiniert sind, zwischen denen sich ein zentraler Bereich des Ansichtsbildes befindet,
- eine Bestimmungseinrichtung, die ausgestaltet ist, wenn das Sensorbild (4) im Vergleich zu einer vorhergehenden Erzeugung des Ausgabebildes nicht mehr denselben Raumbereich abbildet, weil der optische Sensor (26) und der Raum zum Anordnen des zu erfassenden Werkstücks relativ zu einander eine Relativbewegung ausgeführt haben, bei einer wiederholten Erzeugung des Ausgabebildes zu prüfen, ob - bezogen auf ein vorhergehend erzeugtes Ausgabebild bei Verwendung desselben Ansichtsbildes wie in dem vorhergehend erzeugten Ausgabebild - sich das Sensorbild (4) von dem zentralen Bereich über zumindest einen der beiden einander gegenüberliegenden Ränder (2a, 2b, 3a, 3b) hinweg erstrecken würde, und, wenn dies der Fall ist, ein anderes zweidimensionales Ansichtsbild aus den Daten der dreidimensionalen Szene zu erzeugen und an die Kombinationseinrichtung auszugeben, wobei das andere zweidimensionale Ansichtsbild einen entsprechend der Relativbewegung verschobenen Teilbereich der dreidimensionalen Szene erfasst.

12. Anordnung zum Visualisieren eines Sensors (28) eines Koordinatenmessgeräts (10), wobei der Sensor (28) und ein Raum zum Anordnen eines zu erfassenden Werkstücks relativ zu einander beweglich sind, wobei die Anordnung eine Schnittstelle aufweist zum Empfang von Daten einer dreidimensionalen Szene, die relativ zu dem Raum unbeweglich ist, und wobei die Anordnung aufweist:
- eine Kombinationseinrichtung, die ausgestaltet ist, wiederholt eine zweidimensionale Darstellung des Sensors (28) mit einem aus den Daten der dreidimensionalen Szene erzeugten zweidimensionalen Ansichtsbild eines Teilbereichs der dreidimensionalen Szene lagerichtig zu einem zweidimensionalen Ausgabebild zu kombinieren und das Ausgabebild zur Darstellung durch eine Bilddarstellungseinrichtung auszugeben, wobei das zweidimensionale Ansichtsbild entsprechend seiner zwei Dimensionen zwei Richtungen aufweist, entlang denen Bildelemente des Ansichtsbildes darstellbar sind und bei Darstellung durch die Bilddarstellungseinrichtung auch dargestellt werden, wobei für das Ansichtsbild bezüglich zumindest einer der zwei Richtungen einander gegenüberliegende Ränder (2a, 2b, 3a, 3b) vordefiniert sind, zwischen denen sich ein zentraler Bereich des Ansichtsbildes befindet,
- eine Bestimmungseinrichtung, die ausgestaltet ist, wenn der Sensor (28) im Vergleich zu einer vorhergehenden Erzeugung des Ausgabebildes nicht mehr an derselben Position relativ zu dem Raum angeordnet ist, weil der Sensor (28) und der Raum relativ zu einander eine Relativbewegung ausgeführt haben, bei einer wiederholten Erzeugung des Ausgabebildes zu prüfen, ob - bezogen auf ein vorhergehend erzeugtes Ausgabebild bei Verwendung desselben Ansichtsbildes wie in dem vorhergehend erzeugten Ausgabebild - sich die Darstellung des Sensors (28) von dem zentralen Bereich über zumindest einen der beiden einander gegenüberliegenden Ränder (2a, 2b, 3a, 3b) hinweg erstrecken würde, und, wenn dies der Fall ist, ein anderes zweidimensionales Ansichtsbild aus den Daten der dreidimensionalen Szene zu erzeugen und an die Kombinationseinrichtung auszugeben, wobei das andere zweidimensionale Ansichtsbild einen entsprechend der Relativbewegung verschobenen Teilbereich der dreidimensionalen Szene erfasst.

13. Anordnung nach Anspruch 11 oder 12, wobei die Bestimmungseinrichtung ausgestaltet ist, wenn sie festgestellt, dass sich
- im Fall des Anspruchs 11 das Sensorbild (4) oder
- im Fall des Anspruchs 12 die Darstellung des Sensors (28)
von dem zentralen Bereich über lediglich einen der beiden einander gegenüberliegenden Ränder (2a, 2b, 3a, 3b) hinweg erstrecken würde, den Teilbereich der dreidimensionalen Szene so weit zu verschieben, dass sich
- im Fall des Anspruchs 11 das Sensorbild (4) oder
- im Fall des Anspruchs 12 die Darstellung des Sensors (28)
in dem Ansichtsbild zwischen den beiden einander gegenüberliegenden Rändern (2a, 2b, 3a, 3b) befindet.

14. Anordnung nach einem der Ansprüche 11 bis 13, wobei die Bestimmungseinrichtung ausgestaltet ist, wenn sie feststellt wird, dass sich
- im Fall des Anspruchs 11 das Sensorbild (4) oder
- im Fall des Anspruchs 12 die Darstellung des Sensors (28)
von dem zentralen Bereich über die beiden einander gegenüberliegenden Ränder hinweg erstrecken würde, den Teilbereich der dreidimensionalen Szene so weit zu verschieben, dass
- im Fall des Anspruchs 11 das Sensorbild (4) oder
- im Fall des Anspruchs 12 die Darstellung des Sensors (28)
in dem Ausgabebild, das entsprechend den zwei Richtungen eine Bildebene aufweist,
a) um eine Entfernung relativ zu der dreidimensionalen Szene verschoben erscheint, die gleich dem durch die Relativbewegung zurückgelegten Weg multipliziert mit einem vorgegebenen Faktor ist, und/oder
b) in einer Verschiebungsrichtung relativ zu der dreidimensionalen Szene verschoben erscheint, die gleich der Bewegungsrichtung der Relativbewegung projiziert auf die Bildebene des Ausgabebildes ist.

15. Anordnung nach einem der Ansprüche 11 bis 14, die Bestimmungseinrichtung derart ausgestaltet ist, wenn sich
- im Fall des Anspruchs 11 das Sensorbild (4) oder
- im Fall des Anspruchs 12 die Darstellung des Sensors (28)
bezüglich zumindest einer der beiden Richtungen des Ansichtsbildes zunächst nicht zwischen den einander gegenüberliegenden Rändern (2a, 2b, 3a, 3b) des Ansichtsbildes befindet und der Sensor (26, 28) sich dann derart relativ zu dem Raum bewegt, dass sich bei der wiederholten Erzeugung des Ausgabebildes
- im Fall des Anspruchs 11 ein Zentrum des Sensorbildes (4) oder
- im Fall des Anspruchs 12 ein Zentrum der Darstellung des Sensors (28) und ein Zentrum des Ansichtsbildes einander nähern, bei der wiederholten Erzeugung des Ausgabebildes erst dann ein anderes zweidimensionales Ansichtsbild aus den Daten der dreidimensionalen Szene zu erzeugen, welches einen entsprechend der Relativbewegung verschobenen Teilbereich der dreidimensionalen Szene erfasst, wenn
- im Fall des Anspruchs 11 das Sensorbild (4) oder
- im Fall des Anspruchs 12 die Darstellung des Sensors (28)
zumindest einmal vollständig zwischen den zwei einander gegenüberliegenden Rändern (2a, 2b, 3a, 3b) liegt oder zumindest einmal sich von dem zentralen Bereich über beide einander gegenüberliegende Ränder (2a, 2b, 3a, 3b) hinweg erstreckt.

## Claims

1. Method for visualizing sensor signals from an optical sensor (26) of a coordinate measuring machine, wherein
- the optical sensor (26) and a space for arranging a workpiece to be captured are movable relative to each other,
- data of a three-dimensional scene which is immovable relative to the space are received and/or available,
- a two-dimensional sensor image (4), which is generated from image signals from the optical sensor (26) and depicts a spatial region of the space at a given relative position of the optical sensor (26) and of the space, is repeatedly combined with a two-dimensional viewing image of a partial region of the three-dimensional scene that is generated from the data of the three-dimensional scene in a correct position to form a two-dimensional output image, and the output image is output for presentation by an image presentation device,
- the two-dimensional viewing image has, in accordance with its two dimensions, two directions along which image elements of the viewing image are presentable and are also presented during presentation by the image presentation device, wherein, for the viewing image, with respect to at least one of the two directions, mutually opposite peripheries (2a, 2b, 3a, 3b) are predefined between which a central region of the viewing image is located,
- when the sensor image (4) no longer depicts the same spatial region in comparison with a previous generation of the output image because the optical sensor (26) and the space for arranging the workpiece to be captured have performed a relative movement relative to one another, a check is performed during a repeated generation of the output image as to whether - based on a previously generated output image when using the same viewing image as in the previously generated output image - the sensor image (4) would extend from the central region over at least one of the two mutually opposite peripheries (2a, 2b, 3a, 3b), and, if this is the case, a different two-dimensional viewing image is generated from the data of the three-dimensional scene, wherein the other two-dimensional viewing image captures a partial region of the three-dimensional scene that is displaced in accordance with the relative movement.

2. Method for visualizing a sensor of a coordinate measuring machine (10), wherein
- the sensor (28) and a space for arranging a workpiece to be captured are movable relative to each other,
- data of a three-dimensional scene which is immovable relative to the space are received and/or available,
- a two-dimensional presentation of the sensor (28) is repeatedly combined with a two-dimensional viewing image of a partial region of the three-dimensional scene that is generated from the data of the three-dimensional scene in a correct position to form a two-dimensional output image, and the output image is output for presentation by an image presentation device,
- the two-dimensional viewing image has, in accordance with its two dimensions, two directions along which image elements of the viewing image are presentable and are also presented during presentation by the image presentation device, wherein, for the viewing image, with respect to at least one of the two directions, mutually opposite peripheries (2a, 2b, 3a, 3b) are predefined between which a central region of the viewing image is located,
- when the sensor (28) is no longer arranged at the same position relative to the space in comparison with a previous generation of the output image because the sensor (28) and the space have performed a relative movement relative to one another, a check is performed during a repeated generation of the output image as to whether - based on a previously generated output image when using the same viewing image as in the previously generated output image - the presentation of the sensor (28) would extend from the central region over at least one of the two mutually opposite peripheries (2a, 2b, 3a, 3b), and, if this is the case, a different two-dimensional viewing image is generated from the data of the three-dimensional scene, wherein the other two-dimensional viewing image captures a partial region of the three-dimensional scene that is displaced in accordance with the relative movement.

3. Method according to Claim 1 or 2, wherein, if it has been found that
- in the case of Claim 1 the sensor image (4) or
- in the case of Claim 2 the presentation of the sensor (28)
would extend from the central region over merely one of the two mutually opposite peripheries (2a, 2b, 3a, 3b), the partial region of the three-dimensional scene is displaced to such an extent that
- in the case of Claim 1 the sensor image (4) or
- in the case of Claim 2 the presentation of the sensor (28)
is located in the viewing image between the two mutually opposite peripheries (2a, 2b, 3a, 3b).

4. Method according to any of Claims 1 to 3, wherein, if it has been found that
- in the case of Claim 1 the sensor image (4) or
- in the case of Claim 2 the presentation of the sensor (28)
would extend from the central region over the two mutually opposite peripheries (2a, 2b, 3a, 3b), the partial region of the three-dimensional scene is displaced to such an extent that
- in the case of Claim 1 the sensor image (4) or
- in the case of Claim 2 the presentation of the sensor (28)
appears to have been displaced, in the output image having one image plane in accordance with the two directions,
a) by a distance relative to the three-dimensional scene that is equal to the path travelled by the relative movement multiplied by a specified factor, and/or
b) in a displacement direction relative to the three-dimensional scene that is equal to the movement direction of the relative movement projected onto the image plane of the output image.

5. Method according to any of the preceding claims, wherein, with respect to both of the two directions that correspond to the two dimensions of the two-dimensional viewing image, in each case mutually opposite peripheries (2a, 2b, 3a, 3b) are predefined between which the central region of the viewing image is located, and wherein, as a result, four peripheries (2a, 2b, 3a, 3b) are predefined which have a closed surrounding peripheral contour.

6. Method according to any of the preceding claims, wherein at least one (2a, 2b, 3a) of the peripheries (2a, 2b, 3a, 3b) lies in part or completely outside of the viewing image.

7. Method according to any of the preceding claims, wherein at least one (3b) of the peripheries (2a, 2b, 3a, 3b) lies within the viewing image.

8. Method according to any of the preceding claims, wherein
- in the case of Claim 1 the sensor image (4) or
- in the case of Claim 2 the presentation of the sensor (28)
is located, with respect to at least one of the two directions of the viewing image, initially not between the mutually opposite peripheries (2a, 2b, 3a, 3b) of the viewing image, the sensor (28) then moves relative to the space in a manner such that, during the repeated generation of the output image,
- in the case of Claim 1 a centre of the sensor image (4) or
- in the case of Claim 2 a centre of the presentation of the sensor (28)
and a centre of the viewing image approach one another, wherein, during the repeated generation of the output image, a different two-dimensional viewing image which captures a partial region of the three-dimensional scene that is displaced according to the relative movement is generated from the data of the three-dimensional scene only if
- in the case of Claim 1 the sensor image (4) or
- in the case of Claim 2 the presentation of the sensor (28)
lies at least once completely between the two mutually opposite peripheries (2a, 2b, 3a, 3b) or extends at least once from the central region over both mutually opposite peripheries (2a, 2b, 3a, 3b).

9. Method according to any of the preceding claims, wherein the method for visualizing is carried out as part of a method for controlling an operation of the coordinate measuring machine (10), wherein the output image presented on the image presentation device is used when controlling the operation of the coordinate measuring machine (10).

10. Method according to any of the preceding claims, wherein during the generation of the output image, a three-dimensional data set which refers to a three-dimensional coordinate system of the space is used, the three-dimensional data set including data of the scene and
- in the case of Claim 1 sensor data generated from the sensor signals or
- in the case of Claim 2 data for presenting the sensor (28)
according to the current position of the sensor (26, 28) .

11. Arrangement for visualizing sensor signals from an optical sensor (26) of a coordinate measuring machine (10), wherein the optical sensor (26) and a space for arranging a workpiece to be captured are movable relative to each other, wherein the arrangement has an interface for receiving data of a three-dimensional scene which is immovable relative to the space, and wherein the arrangement comprises:
- a combination device, which is designed to repeatedly combine a two-dimensional sensor image (4), which is generated from image signals from the optical sensor (26) and depicts a spatial region of the space at a given relative position of the optical sensor (26) and of the space with a two-dimensional viewing image of a partial region of the three-dimensional scene that is generated from the data of the three-dimensional scene in a correct position to form a two-dimensional output image, and to output the output image for presentation by an image presentation device, wherein the two-dimensional viewing image has, in accordance with its two dimensions, two directions along which image elements of the viewing image are presentable and are also presented during presentation by the image presentation device, wherein, for the viewing image, with respect to at least one of the two directions, mutually opposite peripheries (2a, 2b, 3a, 3b) are predefined between which a central region of the viewing image is located
- a determination device, which is designed to perform a check, when the sensor image (4) no longer depicts the same spatial region in comparison with a previous generation of the output image because the optical sensor (26) and the space for arranging the workpiece to be captured have performed a relative movement relative to one another, during a repeated generation of the output image as to whether - based on a previously generated output image when using the same viewing image as in the previously generated output image - the sensor image (4) would extend from the central region over at least one of the two mutually opposite peripheries (2a, 2b, 3a, 3b), and, if this is the case, to generate a different two-dimensional viewing image from the data of the three-dimensional scene, and to output said image to the combination device, wherein the other two-dimensional viewing image captures a partial region of the three-dimensional scene that is displaced in accordance with the relative movement.

12. Arrangement for visualizing a sensor (28) of a coordinate measuring machine (10), wherein the sensor (28) and a space for arranging a workpiece to be captured are movable relative to each other, wherein the arrangement has an interface for receiving data of a three-dimensional scene which is immovable relative to the space, and wherein the arrangement comprises:
- a combination device, which is designed to repeatedly combine a two-dimensional presentation of the sensor (28) with a two-dimensional viewing image of a partial region of the three-dimensional scene that is generated from the data of the three-dimensional scene in a correct position to form a two-dimensional output image, and to output the output image for presentation by an image presentation device, wherein the two-dimensional viewing image has, in accordance with its two dimensions, two directions along which image elements of the viewing image are presentable and are also presented during presentation by the image presentation device, wherein, for the viewing image, with respect to at least one of the two directions, mutually opposite peripheries (2a, 2b, 3a, 3b) are predefined between which a central region of the viewing image is located,
- a determination device, which is designed to perform a check, when the sensor (28) is no longer arranged at the same position relative to the space in comparison with a previous generation of the output image because the sensor (28) and the space have performed a relative movement relative to one another, during a repeated generation of the output image as to whether - based on a previously generated output image when using the same viewing image as in the previously generated output image
- the presentation of the sensor (28) would extend from the central region over at least one of the two mutually opposite peripheries (2a, 2b, 3a, 3b), and, if this is the case, to generate a different two-dimensional viewing image from the data of the three-dimensional scene, and to output said image to the combination device, wherein the other two-dimensional viewing image captures a partial region of the three-dimensional scene that is displaced in accordance with the relative movement.

13. Arrangement according to Claim 11 or 12, wherein the determination device is designed to displace, if it finds that
- in the case of Claim 11 the sensor image (4) or
- in the case of Claim 12 the presentation of the sensor (28)
would extend from the central region over merely one of the two mutually opposite peripheries (2a, 2b, 3a, 3b), the partial region of the three-dimensional scene to such an extent that
- in the case of Claim 11 the sensor image (4) or
- in the case of Claim 12 the presentation of the sensor (28)
is located in the viewing image between the two mutually opposite peripheries (2a, 2b, 3a, 3b).

14. Arrangement according to any of Claims 11 to 13, wherein the determination device is designed to displace, if it finds that
- in the case of Claim 11 the sensor image (4) or
- in the case of Claim 12 the presentation of the sensor (28)
would extend from the central region over the two mutually opposite peripheries, the partial region of the three-dimensional scene to such an extent that
- in the case of Claim 11 the sensor image (4) or
- in the case of Claim 12 the presentation of the sensor (28)
appears to have been displaced, in the output image having one image plane in accordance with the two directions,
a) by a distance relative to the three-dimensional scene that is equal to the path travelled by the relative movement multiplied by a specified factor, and/or
b) in a displacement direction relative to the three-dimensional scene that is equal to the movement direction of the relative movement projected onto the image plane of the output image.

15. Arrangement according to any of Claims 11 to 14, wherein the determination device is designed such that, if
- in the case of Claim 11 the sensor image (4) or
- in the case of Claim 12 the presentation of the sensor (28)
is located, with respect to at least one of the two directions of the viewing image, initially not between the mutually opposite peripheries (2a, 2b, 3a, 3b) of the viewing image, and the sensor (26, 28) then moves relative to the space in a manner such that, during the repeated generation of the output image,
- in the case of Claim 11 a centre of the sensor image (4) or
- in the case of Claim 12 a centre of the presentation of the sensor (28)
and a centre of the viewing image approach one another, during the repeated generation of the output image a different two-dimensional viewing image which captures a partial region of the three-dimensional scene that is displaced according to the relative movement is generated from the data of the three-dimensional scene only if
- in the case of Claim 11 the sensor image (4) or
- in the case of Claim 12 the presentation of the sensor (28)
lies at least once completely between the two mutually opposite peripheries (2a, 2b, 3a, 3b) or extends at least once from the central region over both mutually opposite peripheries (2a, 2b, 3a, 3b).

## Revendications

1. Procédé de visualisation de signaux de capteur d'un capteur optique (26) d'un appareil de mesure de coordonnées,
- le capteur optique (26) et un espace destiné à disposer une pièce ouvrée à capturer étant mobiles l'un par rapport à l'autre,
- des données d'une scène tridimensionnelle, qui est immobile par rapport à l'espace, étant reçues et/ou étant présentes,
- une image de capteur (4) bidimensionnelle générée à partir de signaux d'image du capteur optique (26), laquelle représente, dans une position relative donnée du capteur optique (26) et de l'espace, une zone d'espace de l'espace, étant combinée avec une image de vue bidimensionnelle, générée à partir des données de la scène tridimensionnelle, d'une zone partielle de la scène tridimensionnelle en position correcte en une image de sortie bidimensionnelle et l'image de sortie étant délivrée en vue de la représentation par un dispositif de représentation d'images,
- l'image de vue bidimensionnelle, conformément à ses deux dimensions, possédant deux directions le long desquelles peuvent être représentés les éléments d'image de l'image de vue et sont également représentés lors de la représentation par le dispositif de représentation d'images, des bords (2a, 2b, 3a, 3b) opposés les uns aux autres, entre lesquels se trouve une zone centrale de l'image de vue, étant prédéfinis pour l'image de vue en référence à au moins l'une des deux directions,
- lorsque l'image de capteur (4) ne représente plus la même zone d'espace en comparaison d'une génération précédente de l'image de sortie parce que le capteur optique (26) et l'espace destiné à disposer la pièce ouvrée à capturer ont accompli un mouvement relatif l'un par rapport à l'autre, un contrôle étant effectué lors d'une génération répétée de l'image de sortie afin de vérifier si - en référence à une image de sortie générée précédemment lors de l'utilisation de la même image de vue que dans l'image de sortie générée précédemment - l'image de capteur (4) s'étendrait au-delà de la zone centrale sur au moins l'un des deux bords (2a, 2b, 3a, 3b) opposés l'un à l'autre et, si cela est le cas, une autre image de vue bidimensionnelle étant générée à partir des données de la scène tridimensionnelle, l'autre image de vue bidimensionnelle capturant une zone partielle de la scène tridimensionnelle décalée conformément au mouvement relatif.

2. Procédé de visualisation d'un capteur d'un appareil de mesure de coordonnées (10),
- le capteur (28) et un espace destiné à disposer une pièce ouvrée à capturer étant mobiles l'un par rapport à l'autre,
- des données d'une scène tridimensionnelle, qui est immobile par rapport à l'espace, étant reçues et/ou étant présentes,
- une représentation bidimensionnelle du capteur (28) étant combinée avec une image de vue bidimensionnelle, générée à partir des données de la scène tridimensionnelle, d'une zone partielle de la scène tridimensionnelle en position correcte en une image de sortie bidimensionnelle et l'image de sortie étant délivrée en vue de la représentation par un dispositif de représentation d'images,
- l'image de vue bidimensionnelle, conformément à ses deux dimensions, possédant deux directions le long desquelles peuvent être représentés les éléments d'image de l'image de vue et sont également représentés lors de la représentation par le dispositif de représentation d'images, des bords (2a, 2b, 3a, 3b) opposés les uns aux autres, entre lesquels se trouve une zone centrale de l'image de vue, étant prédéfinis pour l'image de vue en référence à au moins l'une des deux directions,
- lorsque le capteur (28) n'est plus disposé à la même position par rapport à l'espace en comparaison d'une génération précédente de l'image de sortie parce que le capteur (28) et l'espace ont accompli un mouvement relatif l'un par rapport à l'autre, un contrôle étant effectué lors d'une génération répétée de l'image de sortie afin de vérifier si - en référence à une image de sortie générée précédemment lors de l'utilisation de la même image de vue que dans l'image de sortie générée précédemment - la représentation du capteur (28) s'étendrait au-delà de la zone centrale sur au moins l'un des deux bords (2a, 2b, 3a, 3b) opposés l'un à l'autre et, si cela est le cas, une autre image de vue bidimensionnelle étant générée à partir des données de la scène tridimensionnelle, l'autre image de vue bidimensionnelle capturant une zone partielle de la scène tridimensionnelle décalée conformément au mouvement relatif.

3. Procédé selon la revendication 1 ou 2, lorsqu'il est constaté que
- dans le cas de la revendication 1, l'image de capteur (4) ou
- dans le cas de la revendication 2, la représentation du capteur (28)
s'étendrait au-delà de la zone centrale sur un seul des deux bords (2a, 2b, 3a, 3b) opposés l'un à l'autre, la zone partielle de la scène tridimensionnelle étant décalée à tel point que
- dans le cas de la revendication 1, l'image de capteur (4) ou
- dans le cas de la revendication 2, la représentation du capteur (28)
se trouve dans l'image de vue entre les deux bords (2a, 2b, 3a, 3b) opposés l'un à l'autre.

4. Procédé selon l'une des revendications 1 à 3, lorsqu'il est constaté que
- dans le cas de la revendication 1, l'image de capteur (4) ou
- dans le cas de la revendication 2, la représentation du capteur (28)
s'étendrait au-delà de la zone centrale sur les deux bords (2a, 2b, 3a, 3b) opposés l'un à l'autre, la zone partielle de la scène tridimensionnelle étant décalée à tel point que
- dans le cas de la revendication 1, l'image de capteur (4) ou
- dans le cas de la revendication 2, la représentation du capteur (28)
dans l'image de sortie, qui possède un plan d'image conforme aux deux directions,
a) elle apparaît décalée par rapport à la scène tridimensionnelle d'une distance qui est égale à la valeur parcourue par le mouvement relatif multipliée par un facteur prédéfini, et/ou
b) elle apparaît décalée par rapport à la scène tridimensionnelle dans une direction de décalage qui est égale à la direction de mouvement du mouvement relatif projeté sur le plan d'image de l'image de sortie.

5. Procédé selon l'une des revendications précédentes, des bords (2a, 2b, 3a, 3b) respectivement opposés les uns aux autres, entre lesquels se trouve la zone centrale de l'image de vue, étant prédéfinis en référence aux deux des deux directions, qui correspondent aux deux dimensions de l'image de vue bidimensionnelle et quatre bords (2a, 2b, 3a, 3b) étant ainsi prédéfinis, lesquels ont un tracé de bord périphérique fermé.

6. Procédé selon l'une des revendications précédentes, au moins l'un (2a, 2b, 3a) des bords (2a, 2b, 3a, 3b) se trouvant dans certaines portions ou intégralement en-dehors de l'image de vue.

7. Procédé selon l'une des revendications précédentes, au moins l'un (3b) des bords (2a, 2b, 3a, 3b) se trouvant à l'intérieur de l'image de vue.

8. Procédé selon l'une des revendications précédentes,
- dans le cas de la revendication 1, l'image de capteur (4) ou
- dans le cas de la revendication 2, la représentation du capteur (28)
ne se trouvant initialement pas entre les bords (2a, 2b, 3a, 3b) respectivement opposés les uns aux autres de l'image de vue en référence à au moins l'une des deux directions de l'image de vue, le capteur (28) se déplaçant alors par rapport à l'espace de telle sorte que lors de la génération répétée de l'image de sortie,
- dans le cas de la revendication 1, un centre de l'image de capteur (4) ou
- dans le cas de la revendication 2, un centre de la représentation du capteur (28)
et un centre de l'image de sortie se rapprochent mutuellement, une autre image de vue bidirectionnelle n'étant alors générée à partir des données de la scène tridimensionnelle lors de la génération répétée de l'image de sortie, laquelle capture une zone partielle de la scène tridimensionnelle décalée conformément au mouvement relatif, que si
- dans le cas de la revendication 1, l'image de capteur (4) ou
- dans le cas de la revendication 2, la représentation du capteur (28)
se trouve au moins une fois entièrement entre les deux bords (2a, 2b, 3a, 3b) opposés l'un à l'autre ou s'étend au moins une fois au-delà de la zone centrale sur les deux bords (2a, 2b, 3a, 3b) opposés l'un à l'autre.

9. Procédé selon l'une des revendications précédentes, le procédé de visualisation étant mis en œuvre en tant que partie d'un procédé de commande d'un fonctionnement de l'appareil de mesure de coordonnées (10), l'image de sortie représentée sur le dispositif de représentation d'image étant utilisée lors d'une commande du fonctionnement de l'appareil de mesure de coordonnées (10) .

10. Procédé selon l'une des revendications précédentes, un jeu de données tridimensionnel rapporté à un système de coordonnées tridimensionnel de l'espace étant utilisé lors de la génération de l'image de sortie, lequel comprend les données tridimensionnelles de la scène et
- dans le cas de la revendication 1, des données de capteur générées à partir des signaux de capteur ou
- dans le cas de la revendication 2, des données destinées à la représentation du capteur (28) conformément à la position actuelle du capteur (26, 28).

11. Arrangement de visualisation de signaux de capteur d'un capteur optique (26) d'un appareil de mesure de coordonnées (10), le capteur optique (26) et un espace destiné à disposer une pièce ouvrée à capturer étant mobiles l'un par rapport à l'autre, l'arrangement possédant une interface destinée à la réception de données d'une scène tridimensionnelle, qui est immobile par rapport à l'espace, et l'arrangement comprenant :
- un dispositif de combinaison, qui est configuré pour combiner de manière répétitive une image de capteur (4) bidimensionnelle générée à partir de signaux d'image du capteur optique (26), laquelle représente, dans une position relative donnée du capteur optique (26) et de l'espace, une zone d'espace de l'espace, avec une image de vue bidimensionnelle, générée à partir des données de la scène tridimensionnelle, d'une zone partielle de la scène tridimensionnelle en position correcte en une image de sortie bidimensionnelle et délivrer l'image de sortie en vue de la représentation par un dispositif de représentation d'images, l'image de vue bidimensionnelle, conformément à ses deux dimensions, possédant deux directions le long desquelles peuvent être représentés les éléments d'image de l'image de vue et sont également représentés lors de la représentation par le dispositif de représentation d'images, des bords (2a, 2b, 3a, 3b) opposés les uns aux autres, entre lesquels se trouve une zone centrale de l'image de vue, étant prédéfinis pour l'image de vue en référence à au moins l'une des deux directions,
- un dispositif de détermination, qui est configuré pour, lorsque l'image de capteur (4) ne représente plus la même zone d'espace en comparaison d'une génération précédente de l'image de sortie parce que le capteur optique (26) et l'espace destiné à disposer la pièce ouvrée à capturer ont accompli un mouvement relatif l'un par rapport à l'autre, vérifier lors d'une génération répétée de l'image de sortie si - en référence à une image de sortie générée précédemment lors de l'utilisation de la même image de vue que dans l'image de sortie générée précédemment - l'image de capteur (4) s'étendrait au-delà de la zone centrale sur au moins l'un des deux bords (2a, 2b, 3a, 3b) opposés l'un à l'autre et, si cela est le cas, générer une autre image de vue bidimensionnelle à partir des données de la scène tridimensionnelle et la délivrer au dispositif de combinaison, l'autre image de vue bidimensionnelle capturant une zone partielle de la scène tridimensionnelle décalée conformément au mouvement relatif.

12. Arrangement de visualisation d'un capteur (28) d'un appareil de mesure de coordonnées (10), le capteur (28) et un espace destiné à disposer une pièce ouvrée à capturer étant mobiles l'un par rapport à l'autre, l'arrangement possédant une interface destinée à la réception de données d'une scène tridimensionnelle, qui est immobile par rapport à l'espace, et l'arrangement comprenant :
- un dispositif de combinaison qui est configuré pour combiner de manière répétitive une représentation bidimensionnelle du capteur (28) avec une image de vue bidimensionnelle, générée à partir des données de la scène tridimensionnelle, d'une zone partielle de la scène tridimensionnelle en position correcte en une image de sortie bidimensionnelle et délivrer l'image de sortie en vue de la représentation par un dispositif de représentation d'images, l'image de vue bidimensionnelle, conformément à ses deux dimensions, possédant deux directions le long desquelles peuvent être représentés les éléments d'image de l'image de vue et sont également représentés lors de la représentation par le dispositif de représentation d'images, des bords (2a, 2b, 3a, 3b) opposés les uns aux autres, entre lesquels se trouve une zone centrale de l'image de vue, étant prédéfinis pour l'image de vue en référence à au moins l'une des deux directions,
- un dispositif de détermination qui est configuré pour, lorsque le capteur (28) n'est plus disposé à la même position par rapport à l'espace en comparaison d'une génération précédente de l'image de sortie parce que le capteur (28) et l'espace ont accompli un mouvement relatif l'un par rapport à l'autre, vérifier lors d'une génération répétée de l'image de sortie si - en référence à une image de sortie générée précédemment lors de l'utilisation de la même image de vue que dans l'image de sortie générée précédemment - la représentation du capteur (28) s'étendrait au-delà de la zone centrale sur au moins l'un des deux bords (2a, 2b, 3a, 3b) opposés l'un à l'autre et, si cela est le cas, générer une autre image de vue bidimensionnelle à partir des données de la scène tridimensionnelle et la délivrer au dispositif de combinaison, l'autre image de vue bidimensionnelle capturant une zone partielle de la scène tridimensionnelle décalée conformément au mouvement relatif.

13. Arrangement selon la revendication 11 ou 12, le dispositif de détermination étant configuré pour, lorsqu'il constate que
- dans le cas de la revendication 11, l'image de capteur (4) ou
- dans le cas de la revendication 12, la représentation du capteur (28)
s'étendrait au-delà de la zone centrale sur un seul des deux bords (2a, 2b, 3a, 3b) opposés l'un à l'autre, décaler la zone partielle de la scène tridimensionnelle à tel point que
- dans le cas de la revendication 11, l'image de capteur (4) ou
- dans le cas de la revendication 12, la représentation du capteur (28)
se trouve dans l'image de vue entre les deux bords (2a, 2b, 3a, 3b) opposés l'un à l'autre.

14. Arrangement selon l'une des revendications 11 à 13, dispositif de détermination étant configuré pour, lorsqu'il constate que
- dans le cas de la revendication 11, l'image de capteur (4) ou
- dans le cas de la revendication 12, la représentation du capteur (28)
s'étendrait au-delà de la zone centrale sur les deux bords opposés l'un à l'autre, décaler la zone partielle de la scène tridimensionnelle à tel point que
- dans le cas de la revendication 11, l'image de capteur (4) ou
- dans le cas de la revendication 12, la représentation du capteur (28)
dans l'image de sortie, qui possède un plan d'image conforme aux deux directions,
a) elle apparaît décalée par rapport à la scène tridimensionnelle d'une distance qui est égale à la valeur parcourue par le mouvement relatif multipliée par un facteur prédéfini, et/ou
b) elle apparaît décalée par rapport à la scène tridimensionnelle dans une direction de décalage qui est égale à la direction de mouvement du mouvement relatif projeté sur le plan d'image de l'image de sortie.

15. Procédé selon l'une des revendications 11 à 14, le dispositif de détermination étant configuré de telle sorte que, lorsque,
- dans le cas de la revendication 11, l'image de capteur (4) ou
- dans le cas de la revendication 12, la représentation du capteur (28)
ne se trouve initialement pas entre les bords (2a, 2b, 3a, 3b) respectivement opposés les uns aux autres de l'image de vue en référence à au moins l'une des deux directions de l'image de vue et le capteur (26, 28) se déplace alors par rapport à l'espace de telle sorte que lors de la génération répétée de l'image de sortie,
- dans le cas de la revendication 11, un centre de l'image de capteur (4) ou
- dans le cas de la revendication 12, un centre de la représentation du capteur (28)
et un centre de l'image de sortie se rapprochent mutuellement, une autre image de vue bidirectionnelle n'est alors générée à partir des données de la scène tridimensionnelle lors de la génération répétée de l'image de sortie, laquelle capture une zone partielle de la scène tridimensionnelle décalée conformément au mouvement relatif, que si
- dans le cas de la revendication 11, l'image de capteur (4) ou
- dans le cas de la revendication 12, la représentation du capteur (28)
se trouve au moins une fois entièrement entre les deux bords (2a, 2b, 3a, 3b) opposés l'un à l'autre ou s'étend au moins une fois au-delà de la zone centrale sur les deux bords (2a, 2b, 3a, 3b) opposés l'un à l'autre.
